# EUROPÄISCHE PATENTSCHRIFT

(11) **EP 1 915 849 B1**
(45) Veröffentlichungstag und Bekanntmachung des Hinweises auf die Patenterteilung: **27.04.2011**
(21) Anmeldenummer: 06778085.8
(22) Anmeldetag: 31.07.2006
(51) Int. Cl.: H04M 7/00, H04M 3/22, H04L 1/16, H04L 1/20

(54) **VERFAHREN ZUR STÖRUNGSANALYSE EINES ECHTZEIT-DATENSTROMS IN EINEM DATENNETZ, KOMMUNIKATIONSSYSTEM UND ÜBERWACHUNGSRECHNER**
METHOD FOR ANALYZING PERTURBATIONS OF A REAL-TIME DATA STREAM IN A DATA NETWORK, COMMUNICATION SYSTEM, AND MONITORING COMPUTER
PROCEDE POUR ANALYSER LES PERTURBATIONS D'UN FLUX DE DONNEES EN TEMPS REEL DANS UN RESEAU DE DONNEES, SYSTEME DE COMMUNICATION ET ORDINATEUR DE SURVEILLANCE

(30) Priorität: 18.08.2005 DE 102005039192
(43) Veröffentlichungstag der Anmeldung: 30.04.2008
(73) Patentinhaber: VOIPFUTURE LTD., 20537 Hamburg (DE)
(72) Erfinder: ZÄNCKER, Olaf, 23843 Bad Oldesloe (DE)
(74) Vertreter: Grünecker, Kinkeldey, Stockmair & Schwanhäusser Anwaltssozietät
(86) Internationale Anmeldenummer: PCT/EP2006/064862
(87) Internationale Veröffentlichungsnummer: WO 2007/020182

(56) Entgegenhaltungen:
- US-A1- 2003 128 692
- FEIGIN J ET AL: "Measurement of characteristics of voice over IP in a wireless LAN environment" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15. November 1999 (1999-11-15), Seiten 236-240, XP010370728 ISBN: 0-7803-5904-6

## Beschreibung

Die Erfindung betrifft ein Verfahren zur Fehleranalyse eines Datenstroms, insbesondere eines Echtzeit-Datenstroms, in einem Datennetz. Die Erfindung betrifft ferner ein Kommunikationssystem mit einem Überwachungsrechner zur Fehleranalyse eines Datenstroms, insbesondere eines Echtzeit-Datenstroms, zwischen zwei Kommunikationsgeräten in einem Datennetz sowie einen Überwachungsrechner.

Die multimediale Kommunikation über Kommunikationsnetzwerke mit dem Internet-Protocol (IP), bei der unterschiedliche Echtzeit-Medien (Daten, Audio und Video) parallel transportiert werden, gewinnt ständig an Bedeutung. Für die Übermittlung von Echtzeit-Daten (Audio- und Video-Daten) über IP-Kommunikationsnetze lassen sich die für die Daten-Kommunikation konzipierten Protokolle nicht einsetzen, da aufgrund der Echtzeit-Kommunikation eine Fehlerkontrolle z.B. mit Quittungen, wie dies bei herkömmlicher Datenkommunikation der Fall ist, nicht möglich ist. Weiterhin ist es mit den für Daten-Kommunikation konzipierten Verfahren nicht möglich, die für Echtzeit-Kommunikation wichtige Isochronität bzw. die Abweichung hiervon zu ermitteln.

Kommunikationssysteme, die nach dem Voice-Over-IP (VoIP)-Standard kommunizieren, sind - bedingt durch ihre Komplexität - sehr störanfällig in bezug auf die zu erzielende Sprachqualität. Die Datenübertragung zwischen zwei Kommunikationsgeräten (IP-Soft-Clients, IP-Phones, Gateways, MCUs, etc.) erfolgt paketorientiert nach dem Realtime Transport Protocol (RTP; siehe RFC 3550/1). Das RTP ist ein Protokoll u.a. zur kontinuierlichen Übertragung von audiovisuellen Daten (Streams) über IP-basierte Netzwerke. Das RTP dient dazu, Multimedia-Datenströme, wie z.B. Audio, Video, Text etc., aber auch Signalisierungsinformationen, über Netzwerke zu transportieren, das heißt die Daten zu codieren, zu paketieren und isochron zu versenden. Die Funktion von RTP besteht hauptsächlich in der Übertragung echtzeit-sensitiver Daten. Ein RTP-Datenpaket besteht hauptsächlich aus einem Header mit einer Versions- und Sequenznummer, dem Datenformat (Informationen zum verwendeten Codec), der Sender-ID (SSRC), einem RTP-Zeitstempel, sowie dem Nutzdatenteil.

Das RTP ist ein speziell für den Anwendungsfall der Echtzeit-kommunikation entwickeltes Protokoll. RTP vergibt den zu übertragenden Echtzeit-Datenpaketen eine fortlaufende Sequenznummer, um ihre richtige Reihenfolge, sowie deren Vollständigkeit beim Empfänger erkennen zu können. Die Echtzeit-Datenpakete enthalten auch einen senderseitigen RTP-Zeitstempel, um die Zeitpunkt zu bestimmen, zu denen die einzelnen Audio- und Video-Blöcke generiert wurden. Für die Beurteilung des zeitlichen Verhaltens am Ort der Messung / Ort des Empfanges sind sie jedoch in Ermangelung einer hinreichenden Genauigkeit und auf Grund der Tatsache, dass die lediglich die Situation zum Zeitpunkt des Generierens der Daten repräsentieren und weder die senderseitigen Einflüsse nach Verlassen des RTP-Stacks bis hin zur Aussendung über das Netzwerk-Interface, noch die Einflüsse der Übertragung über ein Datenübertragungsnetzwerk berücksichtigen können, ungeeignet.

Störungen oder Fehler des Kommunikationssystems können in dem sendenden Kommunikationsgerät oder dem die Echtzeit-Datenpakete übertragenden Kommunikationsübertragungsnetz auftreten. Ursachen für die Störungen können unter anderem sein: der RTP-Stack in dem sendenden Kommunikationsgerät, das Betriebssystem des sendenden Kommunikationsgerätes, die Konfiguration des sendenden Kommunikationsgerätes, die Bandbreite des den Echtzeit-Datenstrom übertragenden Datenübertragungsnetzwerks, die Puffer (Buffer) in den aktiven Netzwerkkomponenten des den Echtzeit-Datenstrom übertragenden Datenübertragungsnetzwerkes etc. Dabei kann auch die Überlagerung mehrerer der oben genannten Fehler Ursache für eine Störung sein.

"Measurement of Characteristics of Voice over IP in a Wireless LAN Environment" von Jeffrey Feigin und Kaveh Pahlavan, sowie US 2003/0128692, offenbaren verschiedene Verfahren zur Fehleranalyse eines Echtzeit-Datenstroms.

Der Prozess der Fehlersuche sowie der Fehlerbeseitigung stellt sich in der Praxis als äußerst zeit- und damit auch kostenaufwendig dar. In einigen Fällen ist es sogar nicht möglich, den Fehler ausfindig zu machen, was in letzter Konsequenz eine Nicht-Nutzbarkeit des Kommunikationssystems nach sich ziehen kann.

Derzeit verwendete Fehleranalysen beruhen i.d.R. auf der Auswertung von in z.B. 5-Sekunden-Intervallen übertragenen RTCP (Realtime Transport Control Protocol; siehe auch RFC 3550)-Reports. Die Reports werden durch das empfangende Kommunikationsgerät generiert und an das sendende Kommunikationsgerät als Feedback übertragen, wobei eine Aggregation von Daten von bis zu 500 Echtzeit-Paketen vorgenommen wird. Durch diese verfahrensbedingte Zusammenfassung und Berechnung der in den RTCP-Reports übertragenen Parameter über das gesamte z.B. 5-Sekunden-Intervall, weichen die Parameter teilweise stark von den tatsächlichen Verhältnissen (z.B. realer zeitlicher Verlauf / reale Varianz des zeitlichen Verlaufs) in dem Kommunikationsübertragungsnetz ab bzw. geben ein verfälschtes Abbild. Eine Fehleranalyse des Echtzeit-Datenstroms in dem Datennetz ist dadurch in lediglich einer unzufrieden stellenden Weise möglich.

Es ist daher die Aufgabe der vorliegenden Erfindung, ein Verfahren zur Fehleranalyse eines Datenstroms, insbesondere eines Echtzeit-Datenstroms, in einem Datennetz anzugeben, welches die zuverlässige Bestimmung eines Fehlers (wie z.B. Art des Fehlers, Ort an dem der Fehler verursacht wurde) ermöglicht. Es ist weiterhin Aufgabe der vorliegenden Erfindung, ein Kommunikationssystem sowie einen Überwachungsrechner anzugeben, welche die Fehleranalyse des Datenstroms in einem Datennetz ermöglichen.

Die aufgabe wird durch den Gegenstand der unabhängigen Patentansprüche gelöst. Weitere ausführungsformen sind Gegenstand der abhängigen Patentansprüche.

Bei dem erfindungsgemäßen Verfahren zur Fehleranalyse eines isochronen Echtzeit-Datenstroms, in einem Datennetz wird zur Lösung dieser Aufgabe für jedes zwischen zwei Kommunikationsgeräten des Datennetzes, übertragenen Datenpaketen ein Zeitstempel in einer überwachungseinheit erzeugt, der den Zeitpunkt des Eintreffens eines jeweiligen Datenpakets an der Überwachungseinheit kennzeichnet (Mess-Zeitstempel). Es wird eine Häufigkeitsverteilung (Histogramm) der Zeitdifferenz der Zeitstempel nacheinander an der Überwachungseinheit eintreffender Datenpakete des isochronen Echtzeit-Datenstroms gebildet, die aus der Vielzahl an Zeitstempeln der Datenpakete des Datenstroms ermittelt wird. Schließlich wird eine Mustererkennung durch Überprüfen der Häufigkeitsverteilung vorgenommen, um den Ort und/oder die Ursache eines Fehlers bei der Übertragung des Datenstroms in dem Datennetz zu ermitteln. Dabei werden Muster durch Vergleich mit einem Idealzustand des isochronen Echtzeit-Datenstroms erkannt. Eine erfindungsgemäße Überwachungseinheit zur Fehleranalyse eines isochronen Echtzeitdatenstroms zwischen zwei Kommunikationsgeräten eines Datennetzes, der dazu ausgebildet ist, aus jedem der zwischen den zwei Kommunikationsgeräten des Datennetzes übertragenen Datenpakete einen Zeitstempel zu ermittelh, der den Zeitpunkt des Eintreffens eines jeweiligen Datenpakets an der Überwachungseinheit kennzeichnet (Mess-Zeitstempel) Die Überwachungseinheit ist weiter dazu ausgebildet, eine Häufigkeitsverteilung der Zeitdifferenz der Zeitstempel nacheinander an der Überwachungseinheit eintreffender Datenpakete des isochronen Echtzeit-Datenstroms zu bilden, die aus der Vielzahl an Zeitstempeln der Datenpakete des Datenstroms ermittelt wird. Ferner ist die Überwachungseinheit dazu ausgebildet, eine Mustererkennung der Häufigkeitsverteilung vorzunehmen, um den Ort und/oder die Ursache eines Fehlers bei der Übertragung des Datenstroms in dem Datennetz zu ermitteln. Dabei werden Muster durch vergleich mit einem Idealzustand des isochronen Echtzeit-Datenstroms erkannt.

Die zugrunde liegenden Aufgaben werden ferner durch ein Computerprogrammprodukt gelöst, das direkt in den internen Speicher eines digitalen Computers geladen werden kann und Softwarecode-Abschnitte umfasst, mit denen die Schritte des erfindungsgemäßen Verfahrens durchgeführt werden, wenn das Produkt auf einem Computer läuft.

Das Computerprogrammprodukt, das auf einem computer-geeigneten Medium gespeichert ist, umfasst dabei computer-lesbare Programm-Mittel, die einen Computer veranlassern, das erfindungsgemäße Verfahren zur Fehleranalyse durchzuführen.

Im Gegensatz zu dem aus dem Stand der Technik bekannten Analyse-Verfahren beruht die Erfindung nicht auf einer Zusammenfassung von in einer Vielzahl an Datenpaketen enthaltenen Daten, sondern auf der Auswertung der Zeitdifferenz nacheinander an der Überwachungseinheit eintreffender Datenpakete des isochronen Echtzeit-Datenstroms, die unter Berücksichtigung des Zeitstempels eines jeden der Datenpakete des Datenstroms ermittelt wird. Die Abbildung des zumindest einen Datenübertragungsparameters in einer Häufigkeitsverteilung ermöglicht die Erkennung charakteristischer Muster in den Histogrammen. Hierdurch wird eine sehr genaue Fehleranalyse ermöglicht, welche sowohl eine Aussage über den Ort der Entstehung des Fehlers, z.B. bei dem sendenden Kommunikationsgerät oder dem den Datenstrom übertragenden Datenübertragungsnetzwerk, sowie der Ursache des Fehlers bei der Übertragung des Datenstroms erlaubt.

Als Zeitstempel kommen dabei grundsätzlich der RTP-Zeitstempel eines RTP-Datenpakets (gemäß RFC 3550/1) sowie erfindungsgemäß ein Mess-Zeitstempel in Betracht, der vom Überwachungsrechner beim Eintreffen eines Echtzeit-Datenpaketes gebildet wird. Letzterer kennzeichnet somit (im Gegensatz zu dem, den Zustand bei der Generierung der Datenpakete kennzeichnenden RTP-Zeitstempel) den zeitlichen Verlauf (Zustand) am Ort der Messung. Am Ort der Messung unterliegt ein Echtzeit-Datenpaket nach der Generierung in einemm RTP-Stack bereits dem Einfluss des Betriebssystems des Senders, des Datenübertragungsnetzwerkes, etc. Die erfindungsgemäße Mustererkennung ermöglicht unter Verwendung eines Mess-Zeitstempels eine Fehlerbestimmung unter Berücksichtigung der Komponenten des Datenübertragungsnetzwerks.

Der RTP-Zeitstempel (RTP-Timestamp) dient dazu, den Zeitpunkt der Generierung / Codierung der Nutzlast des Datenpaketes zu markieren. Der Wert des Zeitstempels kann von dem Typ der Nutzlast abhängen. Der Anfangswert kann z.B. von einem Zufallsgenerator ausgewählt werden.

Die Sequenznummer eines Datenpaketes erlaubt es dem empfangenden Kommunikationsgerät, den Verlust von Dateneinheiten festzustellen bzw. die richtige Reihenfolge der Dateneinheiten wiederherzustellen, falls die Datenpakete in einer falschen Reihenfolge angekommen sind. Der Anfangswert +der . Sequenznummer wird z.B. zufällig ausgewählt, um eine unbefugte Entschlüsselung zu erschweren.

Der in der vorliegenden Anmeldung verwendete Begriff des Kommunikationsgerätes ist allgemein zu verstehen. Bei dem Kommunikationsgerät kann es sich um Kommunikationsendgeräte, wie z.B. um IP-Telefone, für VoIP eingerichtete Rechner (z.B. Soft-Clients), Gateways, Konferenzeinrichtungen (MCUs), etc. handeln.

Die Mustererkennung der Häufigkeitsverteilung kann unter Verwendung bekannter Methoden erfolgen. Dies kann beispielsweise durch einen Vergleich mit in einem Speicher hinterlegten zeitlichen Häufigkeitsverteilungen des entsprechenden Datenübertragungsparameters erfolgen, wobei z.B. eine Abweichung über einen oder mehrere vorgegebene Schwellwerte detektiert wird. Der Vergleich kann beispielsweise durch die Umwandlung der Häufigkeitswerte des Histogramms des betreffenden Datenübertragungsparameters in einen Daten-Vektor erfolgen, der auf einfache Weise mittels mathematischer Methoden weiter behandelbar ist.

In dem erfindungsgemäßen Verfahren wird als Datenübertragungsparameter die Zeitdifferenz zwischen den Mess-Zeitstempeln zweier aufeinander folgender Datenpakete einer Datenübertragungs-Richtung (Interarrival Time, IAT) berücksichtigt. Der Datenübertragungsparameter kann dabei im Einzelfall auch von anderen Datenübertragungsparametern beeinflusst sein. So wird die IAT sowohl durch Datenpaketverlust als auch durch die Varianz der Latenzzeit von Datenpaketen beeinflusst. Dies bedeutet, dass sowohl IAT-Histogramme als auch IAT-Zeitdiagramme immer durch die Überlagerung von der Varianz der Latenzzeit von Datenpaketen und dem Datenpaketverlust gekennzeichnet sind. Die Zeitdifferenz zwischen den Mess-Zeitstempeln zweier aufeinander folgender Echtzeit-Datenpakete einer Datenübertragungs-Richtung gibt damit in besonders vorteilhafter Weise einen umfassenden Überblick über die Qualität der Verbindung zwischen den zwei Kommunikationsgeräten. Dabei wird sich unter anderem die Tatsache zunutze gemacht, dass die Kommunikationsgeräte des Datennetzes einen RTP-Stack aufweisen und daher in der Lage sind, die RTP-Datenpakete in einem annähernd isochronen Raster zu übermitteln. Im Gegensatz dazu umfassen die Komponenten des Datenübertragungsnetzwerkes keinen RTP-Stack. Ist der Fehler der Übertragung des Datenstroms durch das Datenübertragungsnetzwerk verursacht, so ist dieses nicht mehr in der Lage, den ursprünglichen zeitlichen Abstand der Echtzeit-Datenpakete zu rekonstruieren. Diese Erkenntnis wird sich gemäß einer vorteilhaften Ausgestaltung der Erfindung zur Ermittlung der Fehlerursache zunutze gemacht.

In einer weiteren Ausführungsform enthält der Datenstrom Audiodaten, insbesondere Voice-over-IP und/oder Comfort Noise (RFC 3389, G.729, etc.). Comfort Noise oder Komfortrauschen ist ein künstlich erzeugtes Rauschen, welches zur Füllung von Stilleperioden, im Mobilfunk sowie in der IP-Telefonie (VoIP), zusammen mit einer Technologie verwendet wird, welche gleichzeitig alle Geräusche unter einem bestimmten Lautstärkepegel unterdrückt. Es erzeugt die Illusion einer weiter bestehenden Verbindung, ohne die für die Übertragung des Rauschens ansonsten notwendige Bandbreite in dem Datenübertragungsnetzwerk zu beanspruchen.

In einer anderen Weiterbildung des erfindungsgemäßen Verfahrens erfolgt die Auswertung der Häufigkeitsverteilung unter Verwendung eines Überwachungsrechners, der die zwischen den Kommunikationsgeräten übertragenen Datenpakete ermittelt und weiterverarbeitet. Der Überwachungsrechner zum Ermitteln der Datenpakete kann hierbei an einer beliebigen Stelle zwischen den Kommunikationsgeräten angeordnet sein. Durch die Auswahl der Stelle, an der der Überwachungsrechner die zwischen den Kommunikationsgeräten übertragenen Datenpakete ermittelt, kann die Lokalisation eines eventuell auftretenden Fehlers erleichtert werden. Dabei kann es insbesondere zweckmäßig sein, in einem erfindungsgemäßen Kommunikationssystem eine Mehrzahl an Überwachungsrechnern vorzusehen.

Eine Alternative oder zusätzliche Ausgestaltung sieht vor, die das datentechnische Abbild der Häufigkeitsverteilung auf Muster zur Erkennung spezifischer Fehler in den Kommunikationsgeräten und dem die Kommunikationsgeräte verbindenden Datenübertragungsnetzwerk zu überprüfen. Als spezifische Fehler können beispielsweise die Bandbreite oder ein Pufferspeicher aktiver Netzkomponenten des Datenübertragungsnetzwerks identifiziert werden. Es ist jedoch ebenfalls möglich, Konfigurationsfehler des sendenden Kommunikationsgerätes, den Einfluss des Betriebssystems sowie Fehler im RTP-Stack zu identifizieren.

Eine weitere Ausbildung sieht vor, dass die datentechnichen Abbilder der Muster der Histogramme zur Unterscheidung eines beliebigen Normalzustands (z.B. regulärer VoIP-Betrieb, Sprachpausenunterdrückung nach einem der standardisierten Verfahren, Verwendung spezieller Kommunikationsgeräte, wie z.B. Voice Response Units) von einem Fehlerzustand herangezogen werden, und dass beim Vorhandensein von Fehlern diese dem sendenden Kommunikationsgerät oder dem Datenübertragungsnetzwerk zuordenbar sind. Hierdurch wird die Beseitigung eines Fehlers wesentlich erleichtert.

In einer weiteren Ausführungsform ist beim Feststellen eines Fehlers in dem sendenden Kommunikationsgerät anhand des Musters der Häufigkeitsverteilung eine konkrete Ursache des Fehlers ermittelbar. Als Ursache des Fehlers kommen insbesondere das Betriebssystem des Kommunikationsgerätes, die Konfiguration des Kommunikationsgerätes, sein RTP-Stack oder dessen Implementierung in Betracht.

In einer weiteren Ausführungsform ist beim Feststellen eines Fehlers im Datenübertragungsnetzwerk anhand des Musters der Häufigkeitsverteilung eine konkrete Ursache des Fehlers ermittelbar. Als Ursache des Fehlers kommen insbesondere mangelnde Bandbreite oder die temporäre Zwischenspeicherung (Pufferung) in aktiven Komponenten des Datenübertragungsnetzwerkes in Betracht.

Zur Ermittlung eines Fehlers in dem Datennetz ist es gemäß einer weiteren bevorzugten Ausführungsform ausreichend, wenn zur Fehleranalyse des Datenstroms der Datenstrom zwischen den zwei Kommunikationsgeräten in einer Richtung oder in beiden Richtungen an einer oder mehreren Mess-Stellen analysiert wird.

Die Erfindung wird nachfolgend anhand der Figuren exemplarisch näher erläutert. Es zeigen:
- Fig. 1: den schematischen Aufbau eines erfindungsgemä- ßen Kommunikationssystems,
- Fig. 2-4: zwei IAT-Diagramme sowie ein IAT-Histogramm einer idealen VoIP-Übertragung,
- Fig. 5-7: zwei IAT-Diagramme sowie ein IAT-Histogramm einer realen VoIP-Übertragung,
- Fig. 8-10: ein IAT-Diagramm sowie zwei IAT-Histogramme einer realen VoIP-Übertragung ohne Datenpaket- verlust, wobei es sich bei einem Kommunika- tionsgerät um eine sog. Voice Response Unit handelt, die ein verändertes Verhalten zeigt
- Fig. 11-13: zwei IAT-Diagramme sowie ein IAT-Histogramm einer realen VoIP-Übertragung ohne Datenpaket- verlust, jedoch mit Sprachpausenunterdrückung,
- Fig. 14,15: ein IAT-Diagramm sowie ein IAT-Histogramm einer realen (nahezu idealen) VoIP-Übertragung ohne Datenpaketverlust und mit sehr geringer Varianz der Latenzzeit von Datenpaketen (Jitter), jedoch mit einem Konfigurationsfeh- ler bei einem der Kommunikationsgeräte,
- Fig. 16-18: zwei IAT-Diagramme sowie ein IAT-Histogramm einer realen VoIP-Übertragung ohne Datenpaket- verlust und mit deutlich ausgeprägter Varianz der Latenzzeit von Datenpaketen (Jitter),
- Fig. 19,20: ein IAT-Diagramm sowie ein IAT-Histogramm einer realen VoIP-Übertragung ohne Datenpaket- verlust und mit deutlich ausgeprägtem punk- tuellen, zyklischem Jitter eines Kommunika- tionsgerätes,
- Fig. 21,22: ein IAT-Diagramm sowie ein IAT-Histogramm einer realen VoIP-Übertragung ohne Datenpaket- verlust und mit deutlicher erhöhter IAT, und
- Fig. 23-25: ein IAT-Diagramm, ein IAT-Histogramm sowie ein Datenpaketverlust-Diagramm einer realen VoIP- Übertragung, bei der häufig durch Paketverlust bedingte hohe IAT-Werte auftreten.

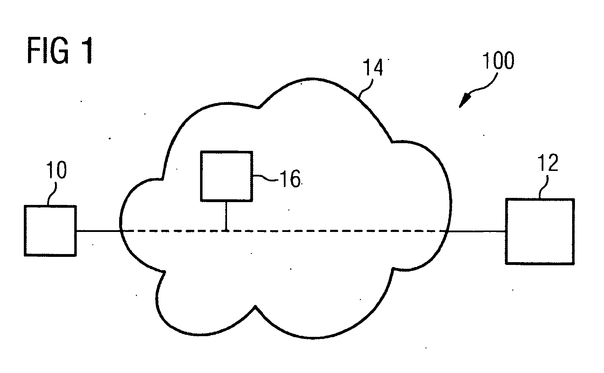

In der Fig.1 ist der schematische Aufbau eines erfindungsgemäßen Kommunikationssystems 100 dargestellt. Dieses umfasst lediglich beispielhaft zwei Kommunikationsgeräte 10, 12, die über ein Datenübertragungsnetzwerk 14 miteinander kommunizieren können. Das Datenübertragungsnetzwerk 14 kann eine Vielzahl an Netzwerkkomponenten aufweisen, über welche eine Verbindung zwischen den Kommunikationsgeräten 10, 12 herstellbar ist.

Die Kommunikationsgeräte 10, 12 können, wie dies in Fig. 1 beispielhaft dargestellt ist, Kommunikationsendgeräte darstellen, welche zur Kommunikation gemäß eines der Voice-over-IP-Standards ausgebildet sind. Die Kommunikationsgeräte 10, 12 weisen hierzu einen RTP-Stack auf, so dass ein zwischen den Kommunikationsgeräten 10, 12 fließender Datenstrom aus einer Vielzahl von RTP-Datenpaketen gebildet werden kann.

Aufgrund des RTP-Stacks sind die Kommunikationsgeräte 10, 12 in der Lage, die RTP-Datenpakete in einem annähernd isochronen Raster zu übermitteln. Die in der Fig. 1 nicht näher dargestellten Netzwerkkomponenten des Datenübertragungsnetzwerks 15 verfügen demgegenüber über keinen RTP-Stack. Beim Auftreten einer Störung der Übertragung eines oder mehrerer RTP-Datenpakete ist das Datenübertragungsnetzwerk 14, d.h. die an der Übertragung beteiligten Netzwerkkomponenten, nicht mehr in der Lage, den ursprünglichen zeitlichen Abstand des sendenden Kommunikationsgerätes 10 oder 12 der RTP-Datenpakete zu rekonstruieren. Diese Erkenntnis ist hilfreich für die Beurteilung der Fehlersituation durch einen Überwachungsrechner 16, der in Fig. 1 beispielhaft in dem Datenübertragungsnetzwerk 14 angeordnet ist.

Der Überwachungsrechner 16 kann an einer beliebigen Stelle einer Verbindungsleitung zwischen den Kommunikationsgeräten 10, 12 angeordnet werden. Besonders vorteilhaft ist es, wenn eine Mehrzahl an Überwachungsrechnern vorgesehen ist, da sich hierdurch eine präzisere Lokalisierung eines Fehlers auf signifikanten Teilstücken des Datenübertragungsnetzwerkes 14 (z.B. Wide Area Network, Uplink, Backbone, Downlink, Ende-zu-Ende) vornehmen lässt. Prinzipiell ist es ausreichend, wenn der Datenstrom einer Kommunikationsrichtung zwischen den Kommunikationsgeräten 10, 12 durch den Überwachungsrechner 16 überwacht wird, wobei das erfindeungsgemäße Verfahren auch nur auf diese eine Richtung angewendet werden kann.

Anschaulich betrachtet kann der Überwachungsrechner als ein einem der Kommunikationsgeräte 10, 12 parallel geschalteter Rechner betrachtet werden, der sowohl die von einem sendenden Kommunikationsgerät über das Datenübertragungsnetzwerk gesendeten, als auch die empfangenen, d.h. vom anderen Kommunikationsgerät gesendeten Datenpakete ermittelt. Insbesondere ermittelt der Überwachungsrechner 16 aus jedem der Echtzeit-Datenpakete den sendeseitigen Zeitstempel (RTP-Timestamp), die RTP-Sequenznummer und fügt einen eigenen, den Zeitpunkt des Eintreffens am Überwachungsrechner kennzeichnenden Zeitstempel (Mess-Timestamp) hinzu. Anhand dieser drei Parameter wird der Überwachungsrechner 16 in die Lage versetzt, das Verhalten der Parameter auf der Senderseite, sowie den Einfluss der Datenübertragung auf die Datenverbindung zwischen den Kommunikationsgeräten 10, 12 zu ermitteln.

Von besonderem Interesse ist hierbei die Zeitdifferenz zwischen zwei aufeinander folgenden Datenpaketen einer Datenübertragungsrichtung, der so genannten "Interarrival Time" (IAT). Da die IAT sowohl durch einen Datenpaketverlust, welcher anhand der Sequenznummer feststellbar ist, als auch durch die Varianz der Latenzzeit von Datenpaketen (dem so genannten Jitter), der aus den Zeitstempeln ermittelbar ist, abhängt, gibt der Datenübertragungsparameter IAT bereits einen guten Überblick über die Sprachqualität einer Datenverbindung zwischen den Kommunikationsgeräten 10, 12. Von besonderer Bedeutung ist dabei die IAT der Mess-Timestamps, da sie das zeitliche Verhalten am Ort der Messung, also unter dem Einfluss eines Datenübertragungsnetzwerkes repräsentiert.

Aus den von dem Überwachungsrechner 16 ermittelten Datenübertragungsparametern wird eine Häufigkeitsverteilung der einzelnen Werte der Datenübertragungsparameter gebildet. In der nachfolgenden Beschreibung ist unter dem Begriff des Diagramms der zeitliche Verlauf und unter dem Begriff des Histogramms die Häufigkeitsverteilung der Datenübertragungsparameter der Echtzeit-Datenpakete zu verstehen. Anhand des Histogramms eines oder mehrerer Datenübertragungsparameter ist es möglich, Normalzustände einer Echtzeit-Datenverbindung (insbesondere einer Sprachverbindung) von Fehlerzuständen zu unterscheiden. Zu diesem Zweck werden die in dem Histogramm vorliegenden Daten einer Mustererkennung unterzogen. Diese kann unter Verwendung an sich bekannter Auswertungsmethoden durch den Überwachungsrechner selbst oder einen weiteren Rechner des Datennetzes 100 vorgenommen werden.

Das Verfahren zur Fehleranalyse eines zwischen den Kommunikationsgeräten 10, 12 ausgetauschten Datenstroms wird nachfolgend anhand einer Vielzahl von Beispielen näher erläutert, wobei auf die Zeitdifferenz zwischen zwei aufeinander folgenden Datenpaketen einer Datenübertragungsrichtung an der Stelle der Messung (IAT der Mess-Timestamps) in den Histogrammen Bezug genommen wird.

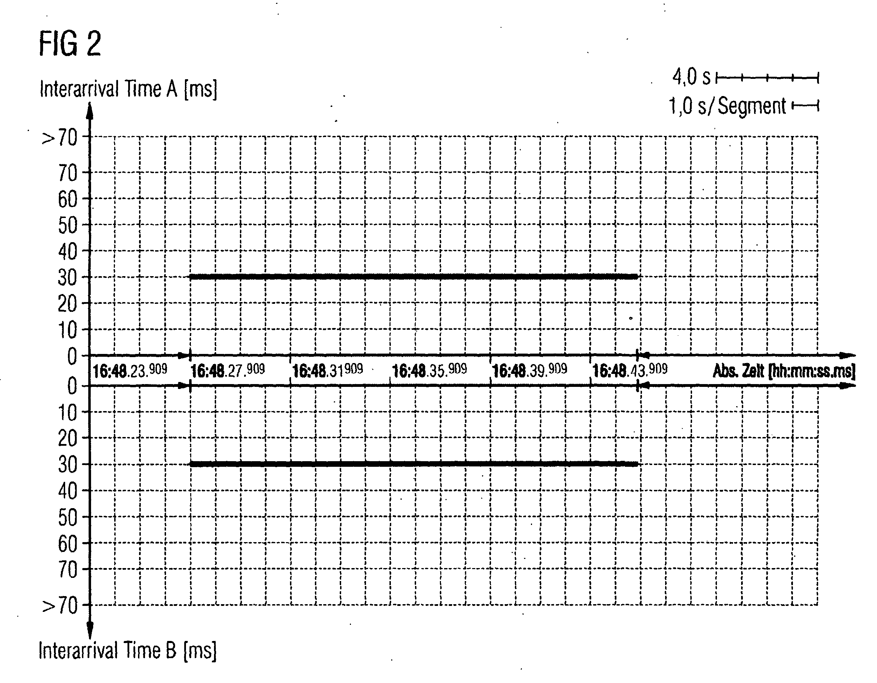

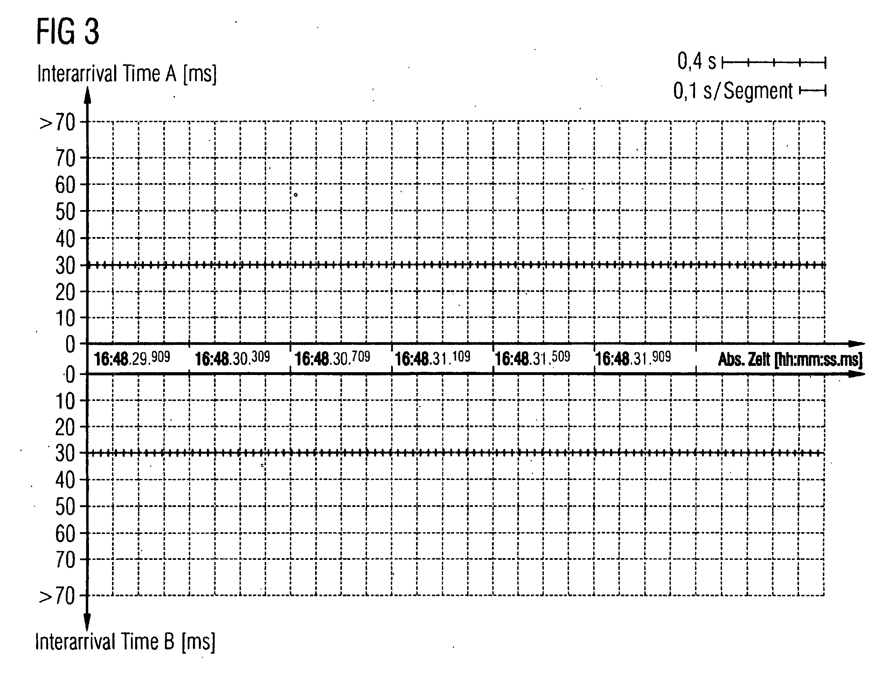

Fig.2 zeigt das IAT-Diagramm einer idealen VoIP-Übertragung. Sämtliche, zwischen den Kommunikationsgeräten 10, 12 ausgetauschten RTP-Datenpakete werden isochron, das heißt im selben zeitlichen Abstand übertragen. Der zeitliche Abstand, der die Zeitdifferenz zwischen zwei aufeinander folgenden Echtzeit-Datenpaketen einer Datenübertragungs-Richtung repräsentiert, beträgt für ein im folgenden als Teilnehmer A bezeichnetes Kommunikationsgerät und für ein im folgenden als Teilnehmer B bezeichnetes Kommunikationsgerät jeweils 30 ms. Die einzelnen, RTP-Datenpakete repräsentierenden Punkte besitzen somit die gleiche IAT, die über die y-Achse aufgetragen ist. Durch die gewählte Auflösung der Fig.2 erscheinen diese als kontinuierliche, horizontale Linie. Fig.3 zeigt dieselbe ideale VoIP-Übertragung, wobei jedoch eine größere Auflösung über die Zeitachse (x-Achse) gewählt ist. Dabei werden neben den IAT-Werten der einzelnen RTP-Datenpakete nun auch die zugehörigen Mess-Timestamps (x-Achse) sichtbar.

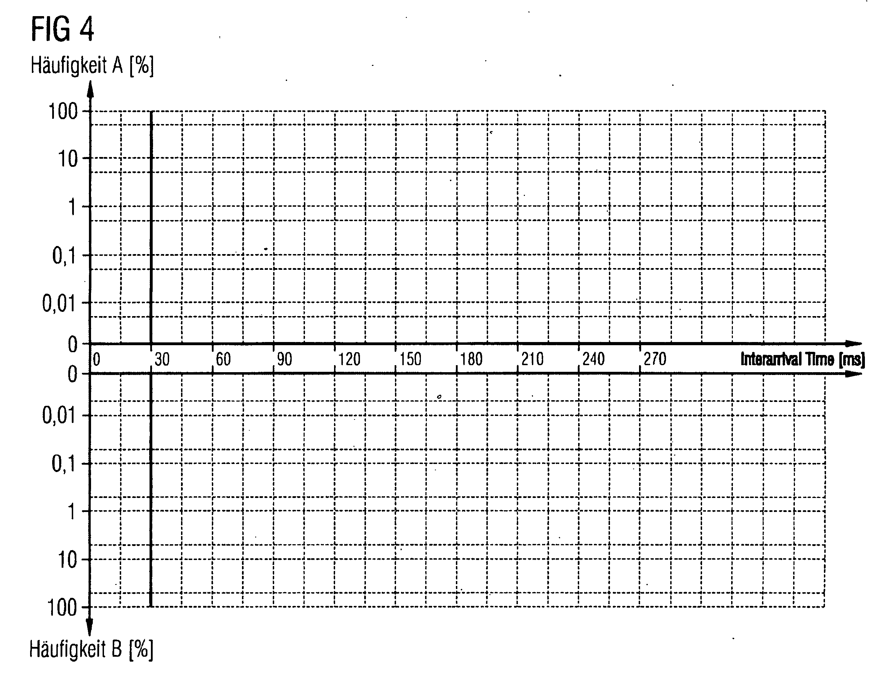

Fig.4 zeigt das zugehörige IAT-Histogramm, somit die Häufigkeitsverteilung der einzelnen Werte der IAT der idealen VoIP-Übertragung. Da sämtliche RTP-Datenpakete zwischen den Teilnehmern A, B isochron übertragen werden, sind auch alle zeitlichen Abstände zwischen zwei aufeinander folgenden RTP-Datenpaketen (IAT) identisch. Somit ergibt sich für die bereits in den Diagrammen der Fig.2 und 3 erkennbare IAT von 30 ms für beide Kommunuikationsgeräte eine vertikale Linie mit dem Häufigeitswert von 100 %.

Dieser in den Fig.2-4 dargestellte Idealzustand wird in der Praxis höchstens annähernd erreicht. Er dient als Referenz für die Beurteilung konkreter Fehlersituationen, die in den nachfolgenden Figuren näher erläutert werden. Weist ein IAT-Histogramm nur eine einzige senkrechte Linie mit einer Höhe von (nahezu) 100 % Häufigkeit auf, so handelt es sich um eine VoIP-Übertragung mit einer (nahezu) idealen VoIP-Sprachqualität, welche keinen Jitter und keinen Datenpaketverlust aufweist.

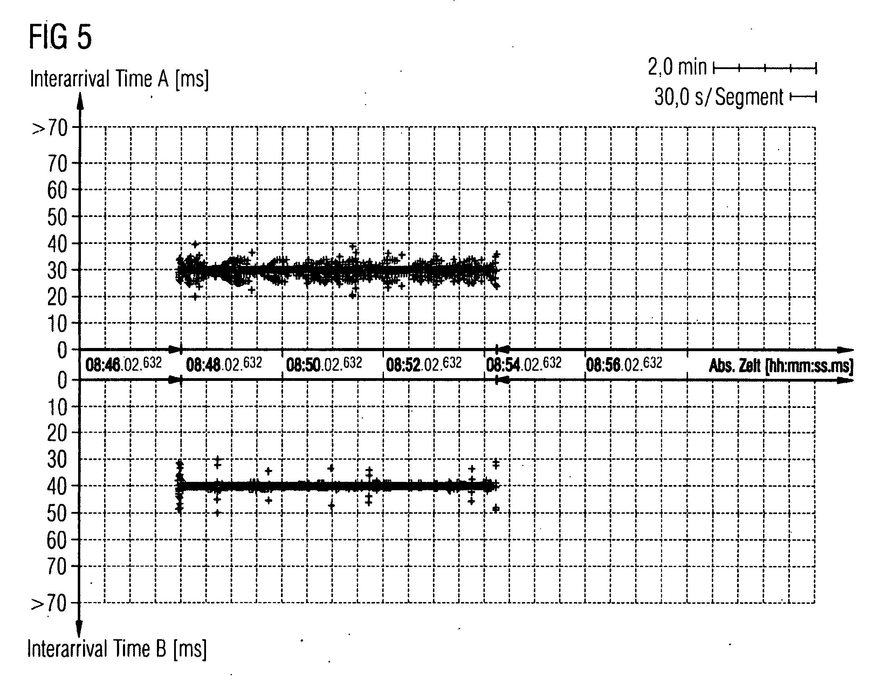

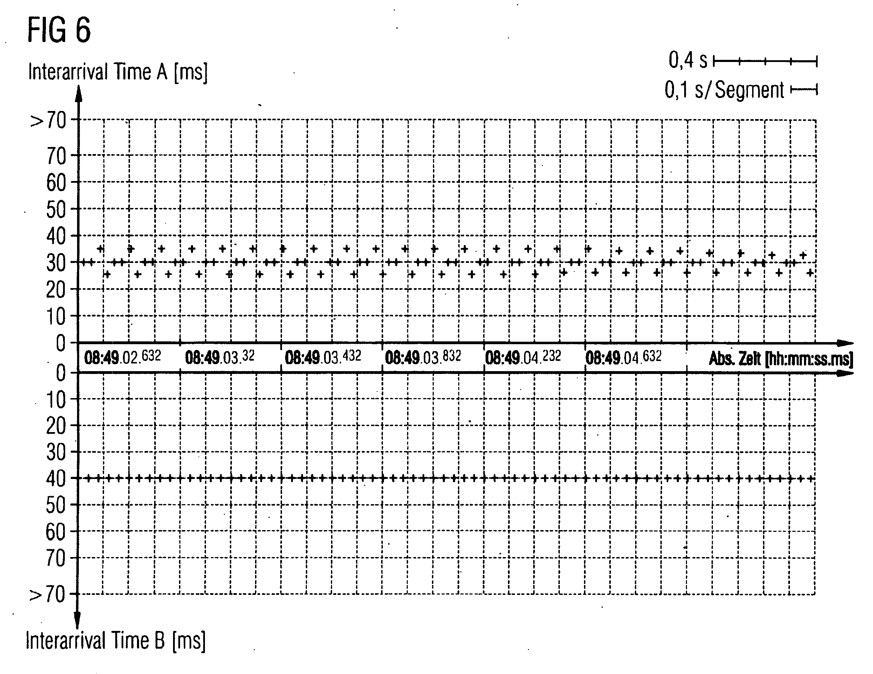

Fig.5 zeigt das IAT-Diagramm einer realen VoIP-Übertragung. (ohne Datenpaketverlust und kritischen Jitter) zwischen zwei IP-fähigen Kommunikationsgeräten, die durch einen Switch in dem Datenübertragungsnetzwerk gekoppelt sind. Die Unterscheidung beider, technisch baugleicher Teilnehmer A, B macht bereits den Einfluss eines einzelnen Switches in dem Datenübertragungsnetzwerk deutlich. Teilnehmer A (in der Figur oben) weist nach der Übertragung über einen Switch eine höhere Varianz der IAT auf, als dies bei Teilnehmer B (in der Figur unten) der Fall ist. Dies bedeutet, bei Teilnehmer A tritt ein deutlich zu erkennender Jitter in Folge der Datenübertragung auf. Bei Teilnehmer B ist hingegen das normale Verhalten (Jitter) eines IP-fähigen Kommunikationsgerätes erkennbar. Das Entstehen symmetrischer Muster ist dabei durch die Zeitauflösung der x-Achse bewirkt. Fig.6 zeigt dieselbe reale VoIP-Übertragung, wobei jedoch eine größere Auflösung der Zeit über die x-Achse gewählt ist. Die einzelnen IAT-Werte der RTP-Datenpakete sind nun deutlich erkennbar, wobei bei Teilnehmer A eine Abweichung vom Idealwert des IAT von 30 ms ersichtlich ist.

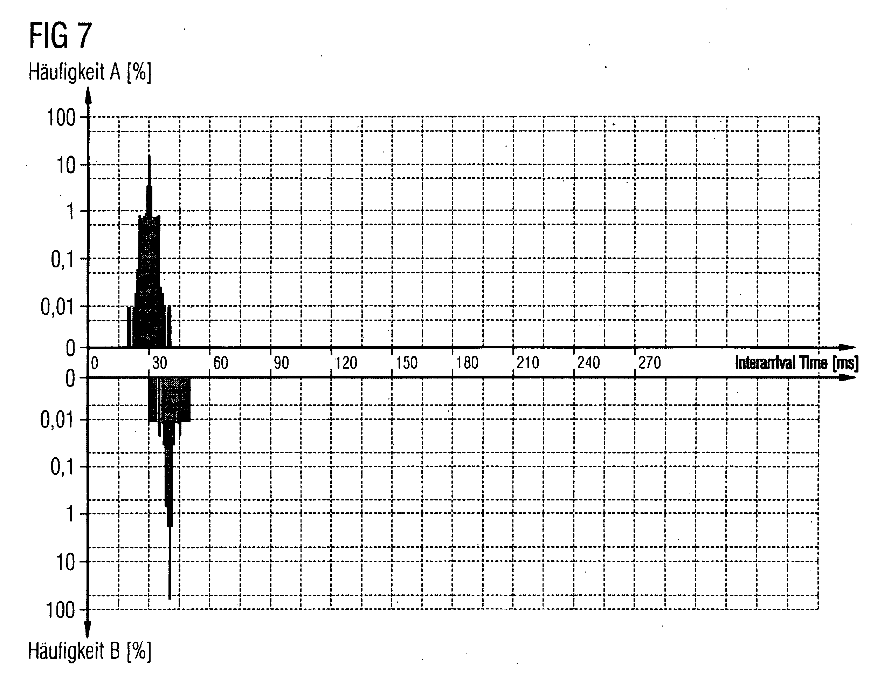

Fig.7 zeigt.das IAT-Histogramm, also die Häufigkeitsverteilung der einzelnen Werte der IAT der VoIP-Übertragung aus Fig. 5 und 6. Für Teilnehmer A ist auch hier die bereits im IAT-Diagramm erkennbare Varianz (Jitter) in der entsprechenden Häufigkeitsverteilung problemlos erkennbar. Das Histogramm ermöglicht gegenüber der zeitlichen Darstellung der IAT-Werte eine kompaktere Darstellung, um zu einem ähnlichen Analyse-Ergebnis zu gelangen. Unabhängig von der Dauer einer VoIP-Übertragung kann unter Berücksichtigung sämtlicher IAT-Werte aller Datenpakete eine Analyse in einer einzigen Grafik nahzu gleicher Größe vorgenommen werden. Das in Fig.7 ersichtliche Muster kennzeichnet den Normalzustand ohne Datenpaketverlust und ohne kritischen Jitter. Der seitliche Versatz der Häufigkeitsverteilungen von Teilnehmer A und B ist darauf zurückzuführen, dass beide IP-fähigen Kommunikationsgeräte (auch als Endpoints bezeichnet) mit unterschiedlichem Abstand (30 ms und 40 ms) senden. Dieses Verhalten ist auch ohne weiteres in den IAT-Diagrammen in Fig.5 und 6 erkennbar.

Ein Normalzustand einer realen VoIP-Übertragung lässt sich damit an einem IAT-Histogramm problemlos erkennen, wobei dieser dann vorliegt, wenn das IAT-Histogramm ein deutlich ausgeprägtes Maximum (Sollzustand des Paketabstandes bei der Aussendung) aufweist, ohne dass die Varianz der Häufigkeitswerte (Jitter = seitliche Aufweitung der Häufigkeitsverteilung im Vergleich zum Idealzustand) zu hoch ist und ohne dass außerhalb der Häufigkeitsverteilung weitere Werte auftauchen. Das Maximum muss dabei an dem Wert des Abstandes der Aussendung der RTP-Pakete der jeweiligen Kommunikationsgeräte erscheinen.

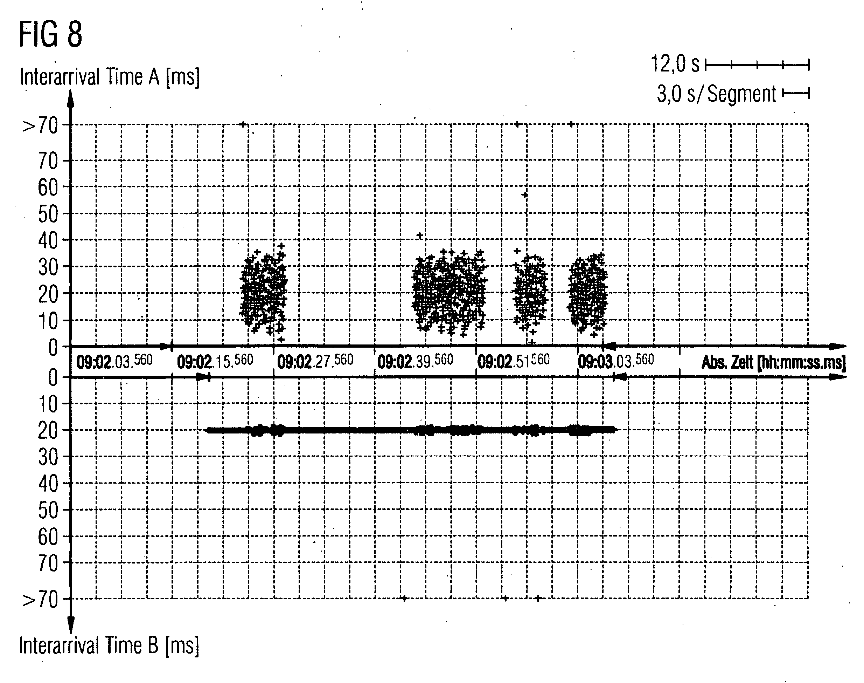

Fig.8 zeigt das IAT-Diagramm einer realen VoIP-Übertragung ohne Datenpaketverlust. Dabei liegt ein Sonderfall vor, bei dem eines der Kommunikationsgeräte durch eine so genannte Voice Response Unit (Sprachcomputer) mit Silence Suppression (Sprachpausenunterdrückung) gemäß RFC 3550 gebildet ist. In dem IAT-Diagramm der Fig.8 sind die diskontinuierliche Übertragung und die starke zeitliche Varianz (Jitter) während der Übertragung bei Kommunikationsgerät A sowie bei den beiden Kommunikationsgeräten A, B einzelne Pakete mit hoher IAT am oberen bzw. unteren Rand der Grafik erkennbar. Die diskontinuierliche Übertragung resultiert aus einer Sprachpausenunterdrückung. Die Diskontinuität der Übertragung mit einem darauf folgenden einzelnen RTP-Datenpaket das eine hohe IAT und ein gesetztes Markerbit aufweist, kennzeichnet bei einer lückenlos aufsteigenden Folge der RTP-Sequenznummern (d.h. kein Datenpaketverlust) eine Sprachpausenunterdrückung gemäß RFC 3550. Die gleichmäßig hohe zeitliche Varianz (Jitter) der Echtzeit-Datenpakete von Kommunikationsgerät A während der Übertragung resultiert aus der endlichen Leistungsfähigkeit des Rechners, auf dem die Sprachmaschine der Voice-Response-Unit ausgeführt wird. Die gleichmäßig hohe zeitliche Varianz (Jitter) in Verbindung mit den Diskontinuitäten (Sprachpausenunterdrückung) lässt eindeutig die Voice-Response-Unit erkennen. Diese Feststellung wird erhärtet durch die geringe Anzahl an RTP-Datenpaketen des Teilnehmers B mit großer IAT, die DTMF-Töne (Signalisierung) in den RTP-Datenpaketen für die Steuerung der Voice-Response-Unit enthalten. Die Länge der Sprachpausen entspricht der Reaktionszeit eines Benutzers des Kommunikationsgeräts bei der DTMF-Eingabe.

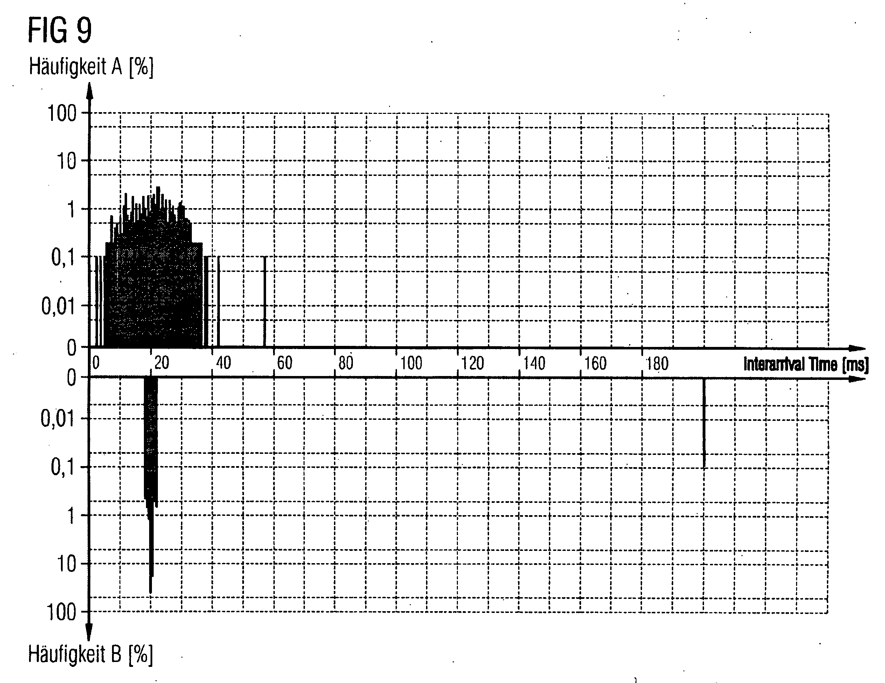

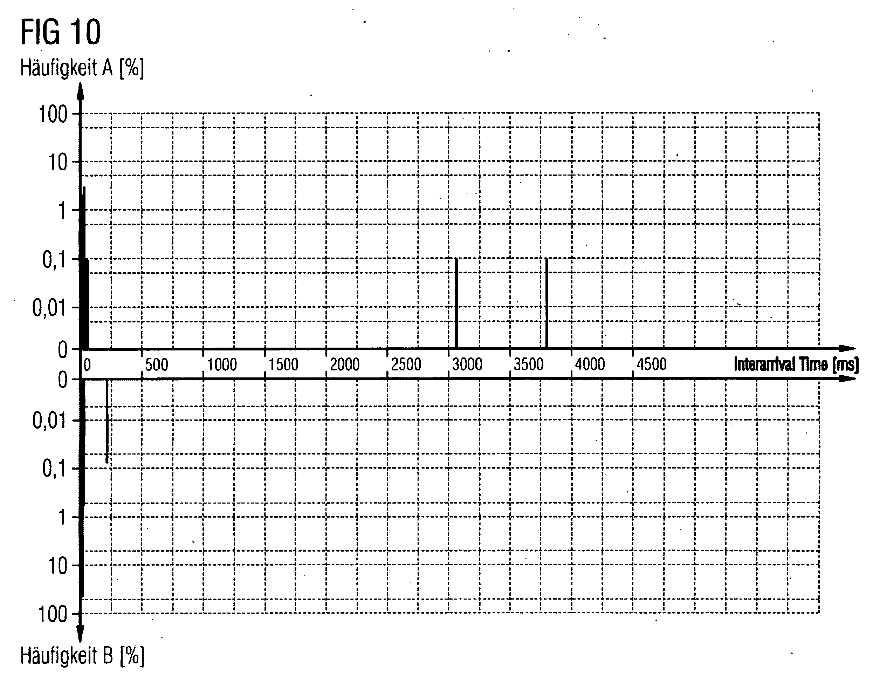

Fig.9 zeigt das zugehörige IAT-Histogramm. Dieses weist eine große Varianz ohne signifikantes Maximum für den Teilnehmer A auf. Fig. 10 zeigt dasselbe IAT-Histogramm mit einer geänderten Auflösung. Nun werden auch die IAT-Extremwerte für den Teilnehmer A (bedingt durch die mit einem Markerbit gekennzeichneten Sprachpausen) und für Teilnehmer B (bedingt durch die DTMF-Eingaben) sichtbar. Für beide Teilnehmer handelt es sich somit nicht um kritische Werte sondern um eine gewollte Folge einer Standard-Funktion eines VoIP-Kommunikationssystemes.

In den Fig.8 bis 10 ist damit ein Normalzustand dargestellt, der weder einen Datenpaketverlust noch einen kritischen Jitter aufweist. Die diskontinuierliche Übertragung (Lücken im zeitlichen Verlauf) entstehen nicht durch einen Datenpaketverlust, sondern durch den regulären Ablauf einer-Voice-Response-Unit (Warten auf eine Eingabe). Die gleichmäßig hohe zeitliche Varianz (Jitter) des Signals von Teilnehmer A ist deswegen nicht als kritisch zu bezeichnen, da es sich nicht um einen regulären VoIP-Endpoint sondern um einen Sprachcomputer mit endlicher Performance handelt.

Weist das IAT-Histogramm damit große IAT-Werte auf, ohne dass ein Datenpaketverlust vorliegt, so handelt es sich für diese RTP-Datenpakete um extremen Jitter. Besitzen diese Jitter-Datenpakete ein gesetztes Markerbit, so handelt es sich nicht um Jitter, sondern um Sprachpausen. Können in einem IAT-Diagramm am Ende von Sprachpausen auf der Gegenseite DTMF-Eingaben nachgewiesen werden, so handelt es sich um den regulären Dialog mit einer Voice-Response-Unit.

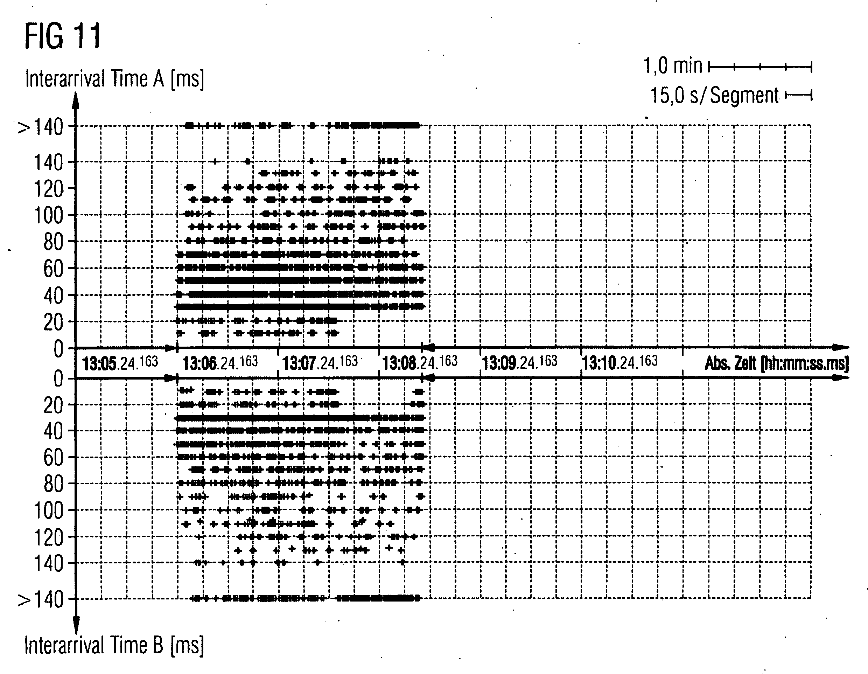

In den Fig. 11 bis 13 ist der Normalzustand einer realen VoIP-Übertragung dargestellt, wobei eine Sprachpausenunterdrückung (Silence-Suppression) mit Comfort-Noise (RFC 3389) vorliegt. Fig. 11 zeigt das IAT-Diagramm der realen VoIP-Übertragung ohne Datenpaketverlust und kritischem Jitter, jedoch mit aktivierter Sprachpausenunterdrückung. Bei der Sprachpausenunterdrückung gemäß RFC 3389 handelt es sich um eines von mehreren alternativen Verfahren, um im Falle von Sprachpausen (das Mikrofon des Senders liefert keine Signale) in Datenübertragungsnetzwerken Übertragungskapazität (Bandbreite) einzusparen. Auffällig in dem IAT-Diagramm ist, dass die RTP-Datenpakete nicht beliebige Werte annehmen, sondern ähnlich wie Elektronenschalen in einem Atommodell nur einige diskrete IAT-Werte aufweisen. Die RTP-Datenpakete formieren sich auf horizontalen, parallel zum Idealzustand verlaufenden Linien, die zusätzlich von einem Jitter überlagert werden können (in diesem Beispiel fast nicht ausgeprägt). Diese auf parallelen Linien erscheinenden RTP-Datenpakete transportieren in ihrem Nutzlastabschnitt keine Sprachdaten, sondern Rauschen (Comfort Noise). Sie besitzen daher auch einen entsprechenden RTP-Nutzlasttyp (Payloadtype 13), der dieses Verfahren als Sprachpausenunterdrückung definiert. Ein ähnliches Verfahren, jedoch ohne eigenen RTP-Nutzlasttyp ist auch für den Codec G.729 definiert.

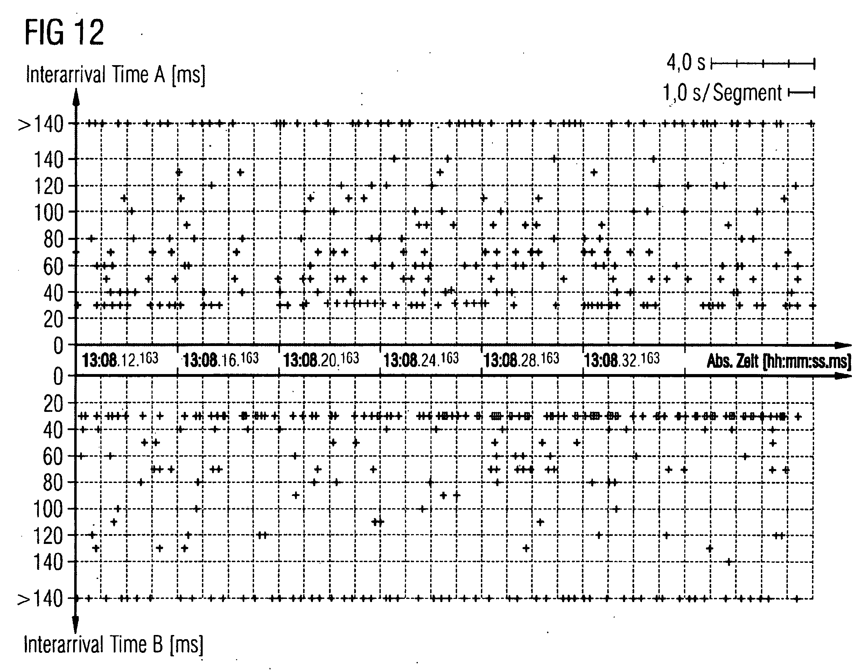

Fig.12 zeigt dieselbe reale VoIP-Übertragung, jedoch mit veränderter Zeitdarstellung über die x-Achse. Die Anordnung der einzelnen RTP-Datenpakete auf parallel zum Idealzustand verlaufenden Linien wird nun sichtbar.

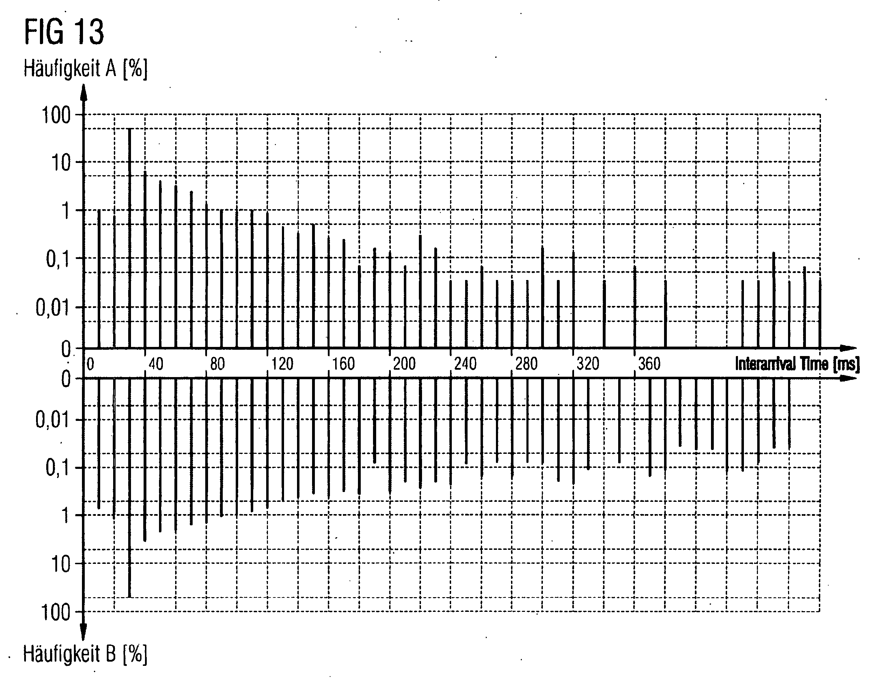

Fig.13 zeigt das zugehörige IAT-Histogramm. Entsprechend wie in den Zeitdiagrammen gemäß Fig. 11 und 12 bilden sich hier deutliche Häufigkeitslinien für ganzzahlige Vielfache des Idealzustandes (Abstand der RTP-Pakete bei der Aussendung ohne Sprachpausenunterdrückung) aus.

Es handelt sich dabei ebenfalls um einen Normalzustand, der weder einen Datenpaketverlust noch einen kritischen Jitter aufweist. Die quasi beliebige Verteilung der RTP-Datenpakete mit dem Nutzlasttyp 13 auf diskrete IAT-Werte kennzeichnet eindeutig eine Sprachpausen-Unterdrückung.

Weist ein IAT-Histogramm somit diskrete Werte mit großer Verteilung auf ganzzahlige Vielfache auf, ohne dass ein Datenpaketverlust vorliegt (was anhand der Sequenznummer feststellbar ist), so handelt es sich um eine Sprachpausen-Unterdrückung mit Comfort Ndise. Die entsprechenden RTP-Datenpakete besitzen gleichzeitig entweder auch einen speziellen Nutzlasttyp mit der Nummer 13 (RFC 3389) oder spezielle Längen der RTP-Nutzlast (G.729). Diese Informationen können ebenfalls durch den Überwachungsrechner ermittelt werden.

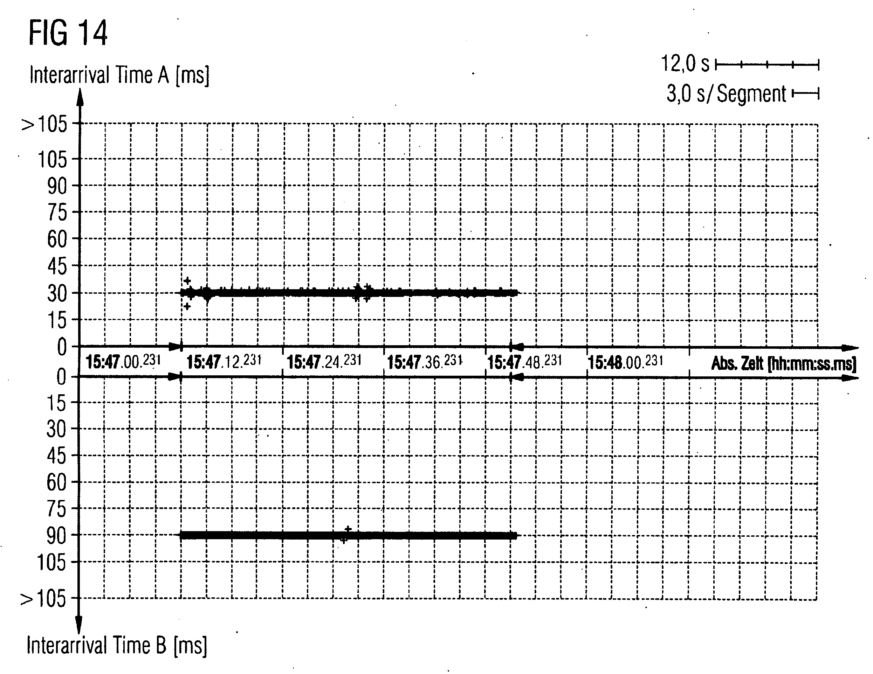

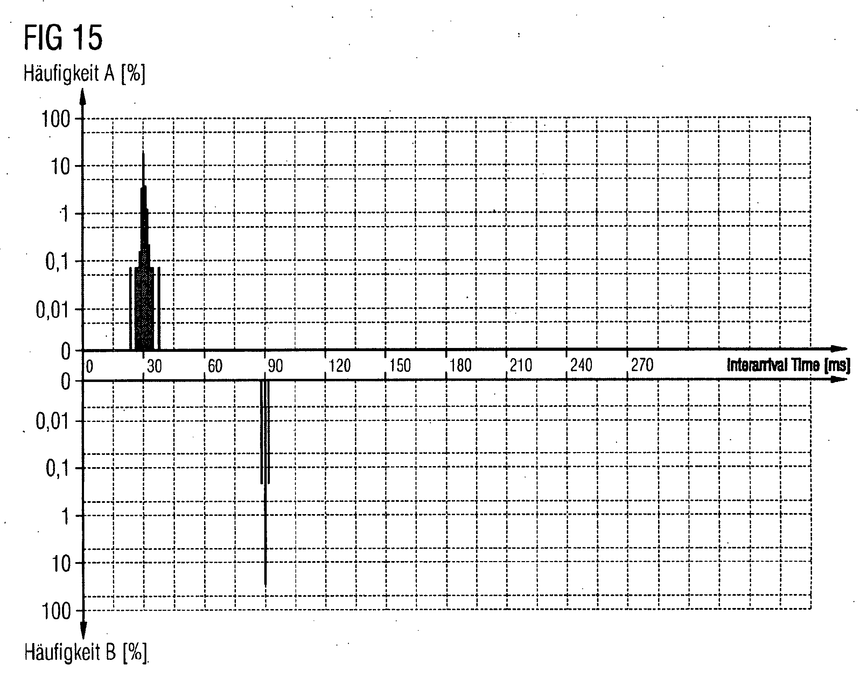

In den Fig.14 und 15 ist ein Normalzustand einer realen VoIP-Übertragung mit einem Konfigurationsfehler eines der beiden Kommunikationsgerätes dargestellt. Fig.14 zeigt das IAT-Diagramm einer realen (nahezu idealen) VoIP-Übertragung ohne Datenpaketverlust und mit sehr geringem Jitter. Während die VoIP-Sprachqualität für beide Kommunikationsgeräte A, B aus Sicht der VoIP-Übertragung als ausgezeichnet bewertet werden kann, fällt für Kommunikationsgerät B die sehr hohe IAT von 90 ms auf. Die IAT wird auf der Senderseite konfiguriert und liegt deutlich über dem normalerweise verwendeten Wert von z.B. 20 ms, was auf einen Konfigurationsfehler schließen lässt. Um einen störungsfreien Empfang zu gewährleisten, muss die Größe des Receiver-Buffers bei dem empfangenden Kommunikationsgeräten entsprechend gewählt werden (>90 ms). Da die Größe des Receiver-Buffers immer additiv in das Gesamt-Budget der Zeitverzögerung zwischen den Kommunikationsgeräten (Endto-End-Delay) eingeht, wird selbst mit 90 ms bereits nahe an dem zulässigen Grenzwert operiert. Üblicherweise sind die Receiver-Buffer jedoch für die Kompensation größerer Abweichungen (z.B. 4 Datenpakete = 4*90 ms= 360 ms) ausgelegt. In diesen Fällen ist dann kein telefonischer Dialog zwischen den Kommunikationsgeräten mehr zu führen.

Fig.15 zeigt das entsprechende IAT-Histogramm. Das Histogramm für Kommunikationsgerät B zeigt das horizontal auf den Wert 90 ms verschobene Muster einer realen Übertragung.

In den Fig. 14 und 15 ist damit ein Normalzustand dargestellt, der weder Datenpaketverlust noch kritischen Jitter aufweist. Es handelt sich somit um eine an sich qualitativ hochwertige VoIP-Übertragung, bei der ein Konfigurationsfehler auf Seiten des sendenden Kommunikationsgeräts vorliegt, welcher zu Problemen in der Sprachqualität (Verständigung) führt.

Weist ein IAT-Histogramm in einem an sonsten gleichartig konfiguriertem (z.B. 30 ms) System einen auf der x-Achse vollständig in Richtung höherer Werte (>60 ms) verschobenes, ansonsten ungestörtes Muster auf, so liegt ein Konfigurationsfehler auf Seiten des sendenden Kommunikationsgerätes vor.

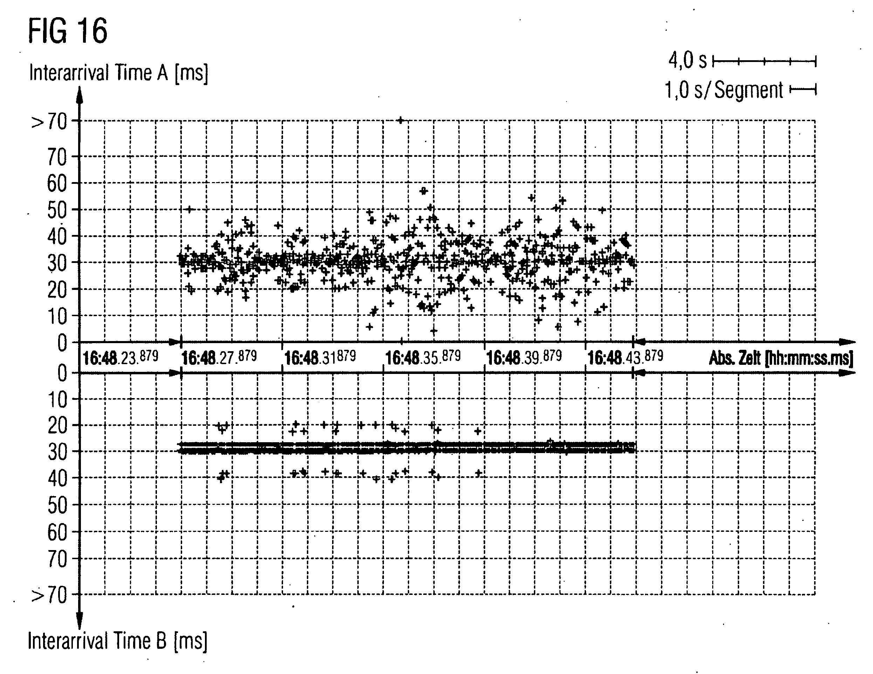

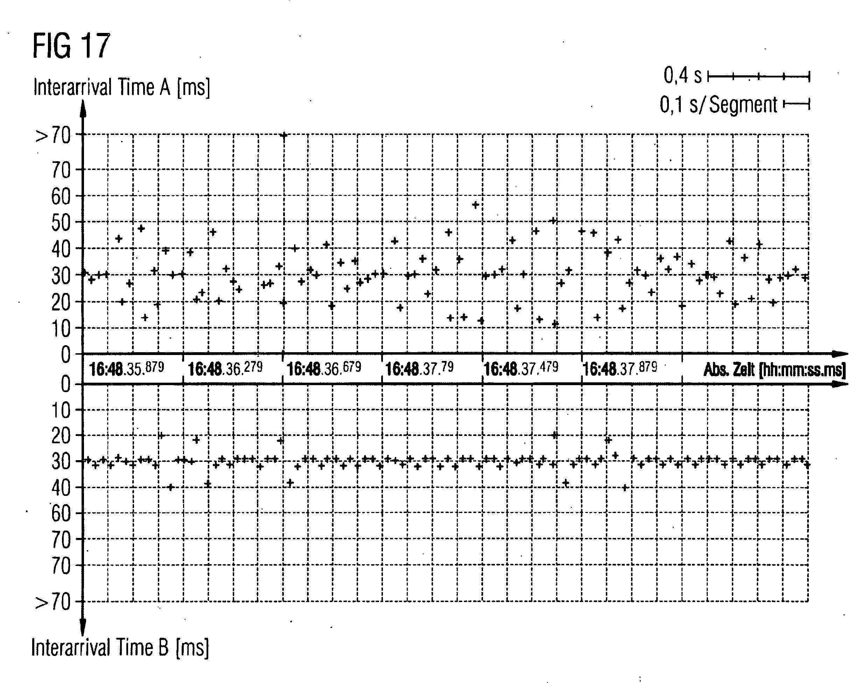

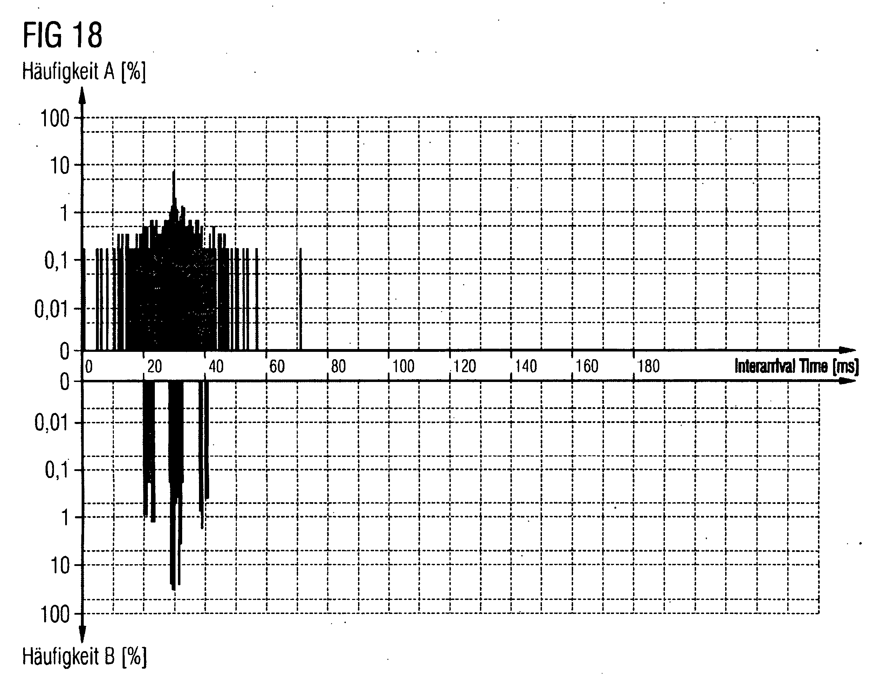

Die Fig.16 bis 18 zeigen eine reale VoIP-Übertragung, bei der Jitter vorliegt. Fig.16 zeigt das IAT-Diagramm der realen VoIP-Übertragung ohne Datenpaketverlust und mit einem deutlich ausgeprägten Jitter für Kommunikationsgerät A. Der IAT-Normalzustand von 30 ms ist lediglich zu erahnen, dafür variiert die IAT der RTP-Datenpakete beliebig um den Normalzustand. Dieses Muster kennzeichnet eine instabile VoIP-Datenübertragungs-Strecke. Fig. 17 zeigt dieselbe reale VoIP-Übertragung, wobei ein vergrößerter Zeitmaßstab der x-Achse gewählt ist. Die starke Varianz der einzelnen RTP-Datenpakete für Kommunikationsgerät A wird nun noch deutlicher erkennbar. Fig.18 zeigt das zugehörige IAT-Histogramm. Die starke Varianz für Teilnehmer A ist problemlos aus dem Histogramm erkennbar. Das signifikante Maximum (Normalzustand) bei 30 ms ist noch deutlich zu erkennen, jedoch variieren die Werte sehr stark um diesen Wert.

In den Fig.16 bis 18 ist damit ein Fehler dargestellt, bei dem es sich um Jitter ohne Datenpaketverlust handelt. Diese Situation ist aus einem IAT-Histogramm erkennbar, bei dem ein signifikantes Maximum als Kennzeichen für den Normalzustand vorliegt und bei dem gleichzeitig das Muster eine große Varianz (Jitter) vorliegt, wobei jedoch kritische Maximalwerte nicht überschritten werden. Diese würden ansonsten auf einen möglichen Datenpaketverlust oder ggf. auf Sprachpausenunterdrückung hinweisen. Das Muster ist somit eindeutig Jitter zuordenbar.

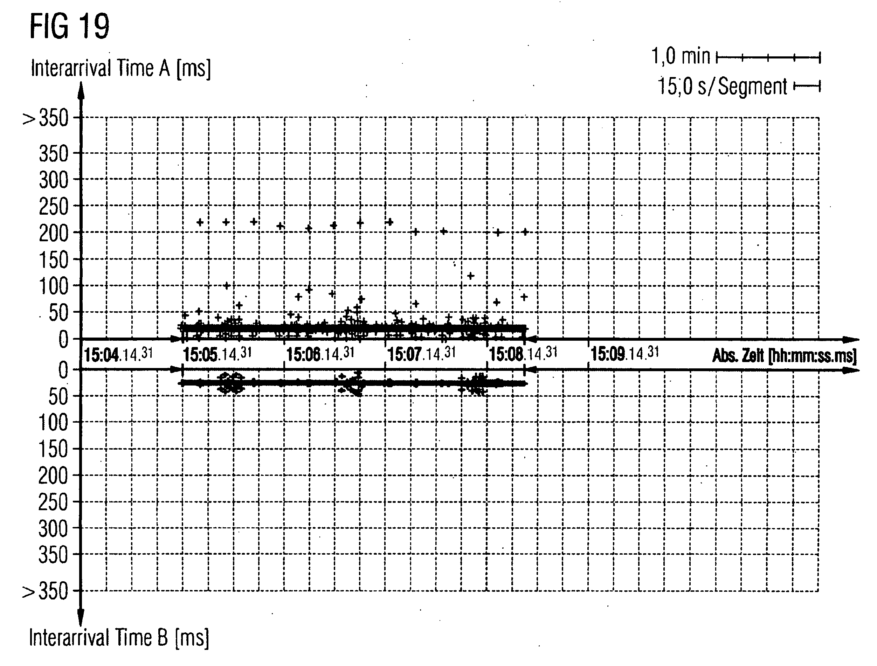

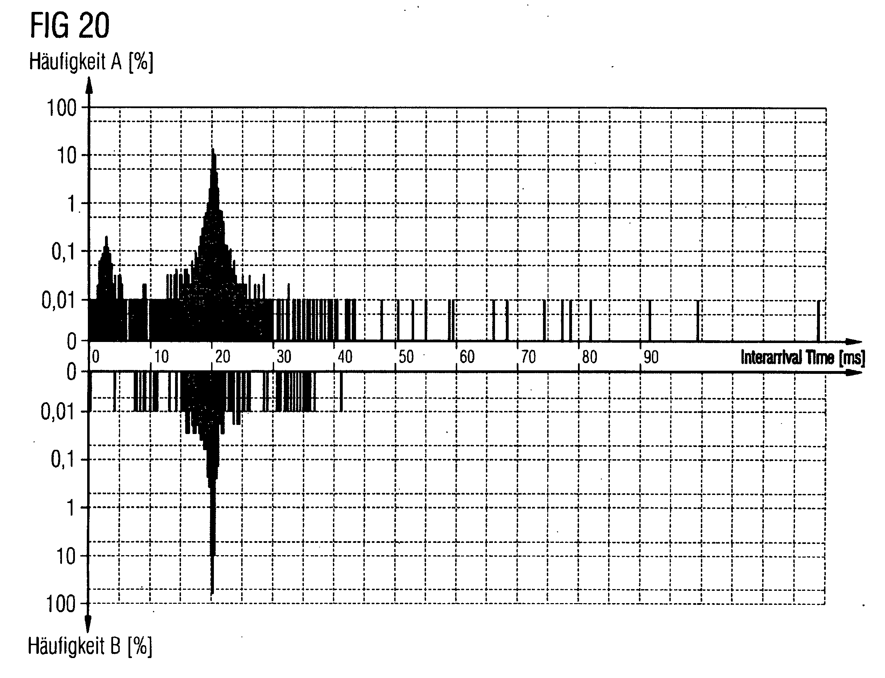

Die Fig.19 und 20 zeigen eine reale VoIP-Übertragung, bei der eine Störung in Form von zyklischem Jitter (Cyclic Jitter) vorliegt. Fig.19 zeigt das IAT-Diagramm der realen VoIP-Übertragung ohne Datenpaketverlust und mit deutlich ausgeprägtem, punktuellem Jitter für Kommunikationsgerät A. Im Vergleich zu dem kontinuierlich auftretenden Jitter gemäß dem vorangegangenen Beispiel in den Fig.16 bis 18 kommt es hier klar erkennbar zu zyklischen (im gleichen zeitlichen Abstand; hier ca. alle 16 Sekunden) Abweichungen einzelner Datenpakete vom Normalzustand. Dieser Zyklus ist immer konstant (hier ca. 16 Sekunden), sein Wert kann jedoch stark variieren, wobei die Variation zwischen wenigen Millisekunden und einigen Sekunden betragen kann. Insbesondere bei auf Software basierenden Clients (z.B. VoIP-Clients, die auf Rechnern laufen) kann dieser Effekt stark ausgeprägt sein und entspricht z.B. der Zyklus-Länge von Interrupts des Betriebssystems. Dies kann beispielsweise bei einer Anordnung des Überwachungsrechners unmittelbar hinter dem betreffenden software-basierenden Client, damit vor der Übertragung der Datenpakete über das Datenübertragungsnetzwerk, nachgewiesen werden, ist aber insbesondere auch auf der Seite des empfangenden Kommunikationsgerätes in gleicher Weise erkennbar. Da weiterhin nicht davon auszugehen ist, dass es in dem Datenübertragungsnetzwerk eine Komponente gibt, die in der Lage ist, zyklische Störungen hervorzurufen, ist beim Auftreten zyklischer Störungen mit hoher Wahrscheinlichkeit davon auszugehen, dass es sich um Störungen auf Seiten des sendenden Kommunikationsgerätes handelt. Die Amplitude der zyklischen Störung kann wie in diesen Beispiel nahezu konstant sein, oder - abhängig vom Verhältnis (ganzzahlig oder nicht ganzzahlig) des Zyklus der Störung zum Normalzustand der RTP-Aussendung - auch langsam schwinden (so genanntes Fading) und wieder auftauchen. In jedem Falle ist das zyklische Verhalten auch noch auf der Seite des empfangenden Kommunikationsgerätes nachweisbar.

Fig.20 zeigt das entsprechende IAT-Histogramm. In diesem IAT-Histogramm sind die deutlich überhöhten Werte der IAT, jedoch nicht deren zyklischer Charakter zu erkennen.

Bei diesem Ausführungsbeispiel handelt es sich somit im Grunde (bis auf wenige Ausnahmen) um eine ungestörte VoIP-Übertragung. Das zyklisch-punktuelle Jitter-Verhalten deutet mit hoher Wahrscheinlichkeit darauf hin, dass die Ursache nicht im Datenübertragungsnetzwerk, sondern auf Seiten des sendenden Kommunikationsgerätes liegt. Dies kann beispielsweise durch einen Interrupt des Betriebssystems oder andere zyklisch ablaufende interne Prozesse des Senders hervorgerufen sein.

Weist ein IAT-Histogramm kritisch erhöhte, sich diskret vom übrigen Muster abzeichnende Werte (Jitter) auf, kann es sich um zyklische Störungen handeln. Damit ist als zusätzliches Kriterium in einem IAT-Diagramm zu überprüfen, ob ein zyklisches Verhalten (gleicher Abstand der Mess-Timestamps der Störungen, d.h. auch gleicher Abstand auf der x-Achse) des Jitters erkennbar ist. Wird das zyklische Verhalten speziell einzelner RTP-Datenpakete erkannt, liegt die Störung mit hoher Wahrscheinlichkeit auf Sender-Seite.

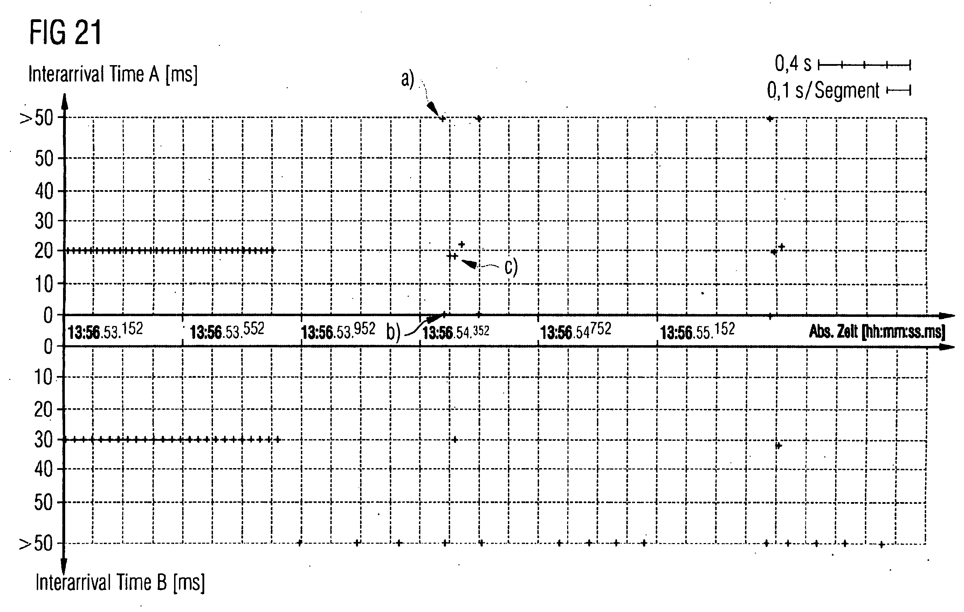

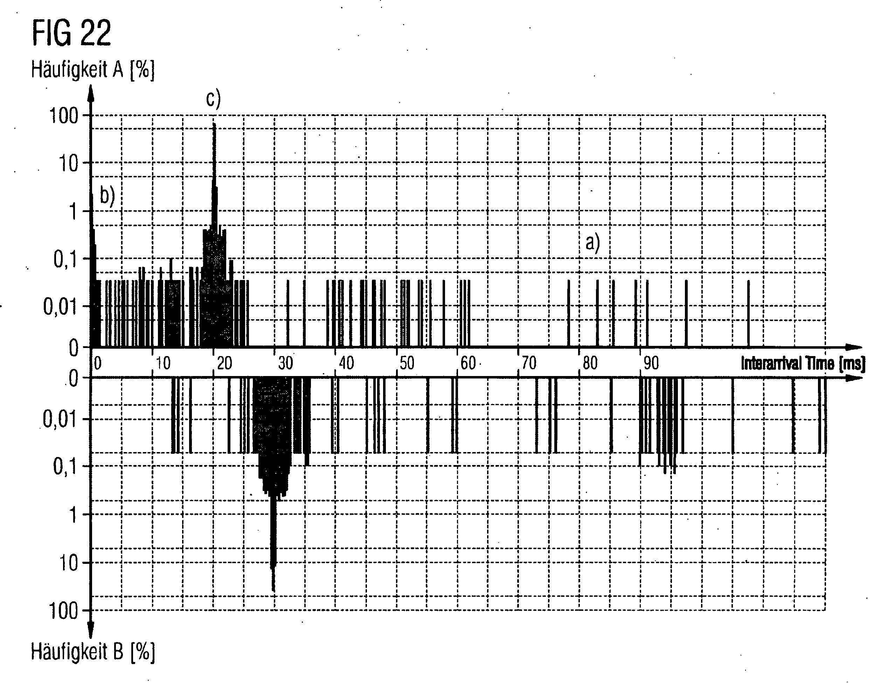

In den Fig.21 und 22 ist eine reale VoIP-Übertragung dargestellt, bei der eine Störung in Form eines so genannten Singular Jitter vorliegt. Fig.21 zeigt das IAT-Diagramm der realen VoIP-Übertragung ohne Datenpaketverlust, ohne Sprachpausenunterdrückung, und mit deutlicher erhöhter IAT, bei der es sich daher um Jitter handelt. Dieser Jitter tritt in einer ansonsten ungestörten VoIP-Übertragung mit einer IAT von 20 ms als Normalzustand bei Kommunikationsgerät A schlagartig auf. Das auf die durch den Jitter entstehende Lücke folgende RTP-Datenpaket (in der Figur mit a) gekennzeichnet) hat konsequenterweise eine entsprechend hohe IAT. Nach dem Datenpaket a) werden mehrere RTP-Datenpakete (vergleiche b)) mit einer gegen Null gehenden IAT (als NZ-IAT, Near Zero-IAT, bezeichnet) registriert. Wegen des extrem geringen zeitlichen Abstandes erscheinen die RTP-Datenpakete in dieser Darstellung als ein Paket. Anschließend geht die normale Aussendung (vergleiche c)) mit 20 ms weiter. Die NZ-IAT (b)) sind die Folge einer im Datenübertragungsnetzwerk erfolgten Pufferung, z.B. aufgrund einer Überlast. Da das Datenübertragungsnetzwerk über keinen RTP-Stack verfügt, und somit nicht in der Lage ist, die ursprüngliche normale IAT von 20 ms nach der Pufferung wieder zu rekonstruieren, werden bis zur Leerung des Puffers sämtliche RTP-Datenpakete schnellstmöglich an den Empfänger weitergeleitet. Die NZ-IAT ist damit ein eindeutiges Kennzeichen für eine Pufferung in den Komponenten eines IAT-Datenübertragungsnetzwerkes.

Fig. 22 zeigt das entsprechende IAT-Histogramm. Hier sind neben dem Normalzustand (vergleiche c) in Fig. 22) und den extremwerten (vergleiche a) in Fig. 22) deutlich die NZ-IAT (vergleiche b) in Fig. 22) zu erkennen.

In diesem Ausführungsbeispiel handelt es sich somit eindeutig um eine in dem Datenübertragungsnetzwerk verursachte Störung durch eine Pufferung eines RTP-Datenstromes mit anschließender schnellstmöglicher Aussendung der Datenpakete ohne Rekonstruktion der normalen IAT. Weist somit ein IAT-Histogramm gegen Null gehende IAT-Werte (NZ-IAT) auf, so ist dies ein eindeutiges Zeichen für die Pufferung von Datenpaketen im Datenübertragungsnetzwerk. Dieser Fall ist eindeutig von den geringen, allerdings nicht gegen Null gehenden IAT-Werten des vorangegangenen Ausführungsbeispiels gemäß den Fig.19 und 20 unterscheidbar. Zur Fehlererkennung könnte als zusätzliches kriterium auch noch das IAT-Diagramm herangezogen werden, welches mehrere aufeinander folgende NZ-IAT-Pakete aufweist.

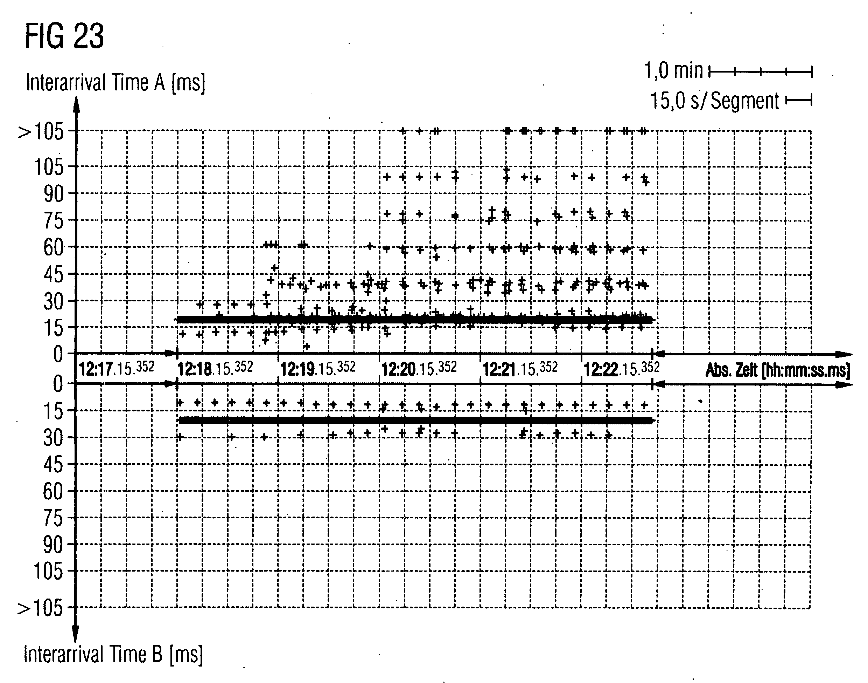

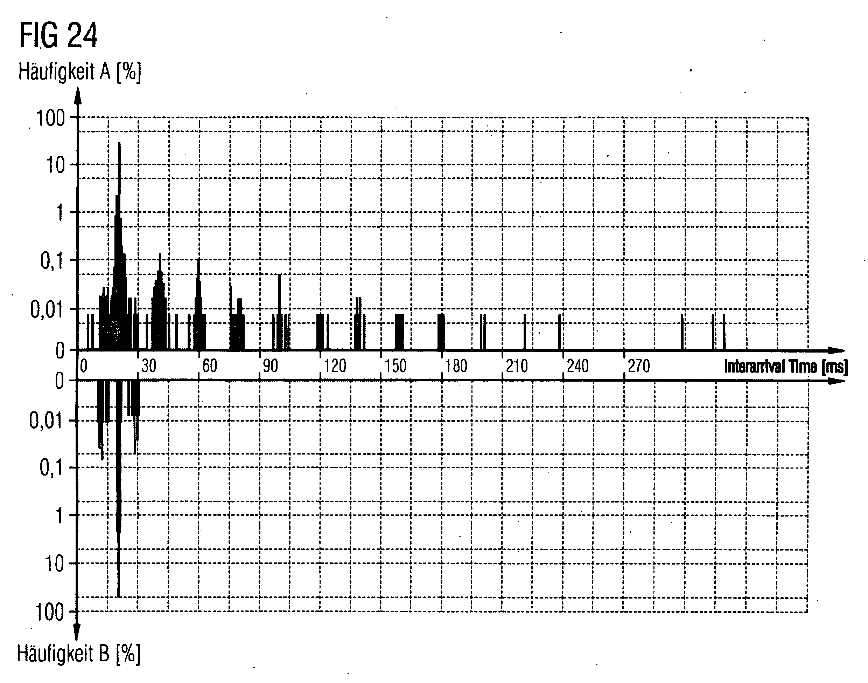

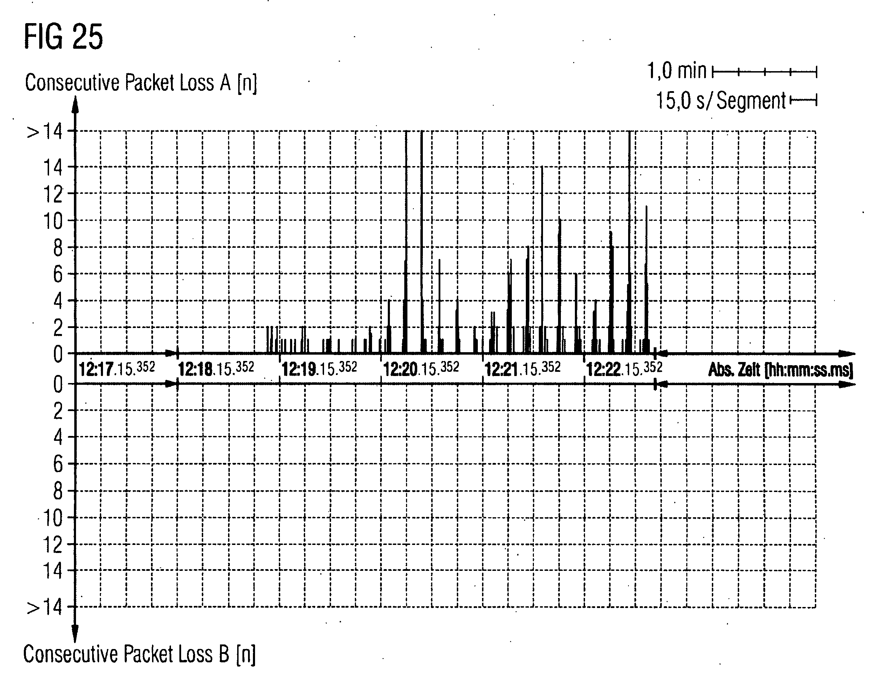

Die Fig.23 bis 25 zeigen als weiteres Ausführungsbeispiel eine reale VoIP-Übertragung, bei welcher als Störung ein Datenpaketverlust vorliegt. Fig.23 zeigt das IAT-Diagramm einer realen VoIP-Übertragung, bei der häufig hohe IAT-Werte auftreten. Hier ist zunächst noch nicht ersichtlich, ob es sich um einen Datenpaketverlust (Verlust eines oder mehrerer RTP-Pakete) oder um Jitter handelt. Fig.24 zeigt das entsprechende IAT-Histogramm. Hier kann man neben dem normalen Muster bei 20 ms deutliche weitere, kleinere Muster, die bei ganzzahligen Vielfachen des Normalzustandes (40 ms, 60 ms, usw.), die ähnlich "Oberwellen" verteilt liegen, erkennen. Alle Muster zeigen dabei die gleiche, durch normalen Jitter bedingte Aufweitung auf. Hier liegt jedoch die Vermutung auf einen Datenpaketverlust schon nahe. Die endgültige Überprüfung erfolgt anhand der Auswertung eines Datenpaketverlust-Diagrammes (Fig.25), welches die Bestätigung von Datenpaketverlust bestätigt.

In diesem Ausführungsbeispiel liegt damit ein Datenpaketverlust vor, kombiniert mit einem leichten Jitter.

Weist demgemäß ein IAT-Histogramm neben einem Muster für den Normalzustand weitere gleichartige "Oberwellen" bei ganz-zahligen Vielfachen des Normalzustandes auf, so besteht ein Verdacht auf Datenpaketverlust. Eine Bestätigung erfolgt durch den Vergleich des IAT-Diagrammes mit einem Datenpaketverlust-Diagramm bzw. dem Datenpaketverlust-Histogramm.

Die Mustererkennung und damit die Fehleranalyse kann automatisiert durch Auswertung der Histogramme bzw. durch die, diesen Histogrammen entsprechenden mathematischen Datenmodelle erfolgen. Ein Histogramm kann beispielsweise datentechnisch durch einen Datenvektor mit einer entsprechenden Anzahl an Einträgen beschrieben werden. Darüber hinaus existieren Algorithmen zur Mustererkennung und die dafür notwendigen Rechner.

Die Erfindung ermöglicht damit eine Fehleranalyse, welche sowohl die Fehlerursache (z.B. IAT, Jitter, Datenpaketverlust, etc.) als auch den Fehlerort (Komponenten des Datenübertragungsnetzwerkes, RTP-Stack des Senders, Konfiguration des Senders, etc.) ermitteln lässt. Hierdurch ist es möglich, Fehler zu klassifizieren (z.B. Fehler in einem sendenden Kommunikationsgerät oder Fehler in einem Datenübertragungsnetzwerk). Die für die Mustererkennung notwendigen Vergleichsmuster, Zusammenhänge und/oder Schwellwerte und dergleichen können beispielsweise in dem Überwachungsrechner vorgehalten werden. Die Vergleichsmuster und/oder Schwellwerte können beispielsweise durch Versuche ermittelt worden sein.

## Patentansprüche

1. Verfahren zur Fehleranalyse eines isochronen Echtzeit-Datenstroms in einem Datennetz (100) durch eine Überwachungseinheit (16) im Datennetz (100), umfassend die folgenden Schritte, die von der Überwachungseinheit (16) ausgeführt werden:
Empfangen von Datenpaketen des isochronen Echtzeit-Datenstroms,
Erzeugen eines Zeitstempels für jedes zwischen zwei Kommunikationsgeräten (10, 12) des Datennetzes (100) übertragene Datenpaket, wobei die Zeitstempel den Zeitpunkt des Eintreffens eines jeweiligen Datenpaketes an der Überwachungseinheit (16) kennzeichnen,
Ermitteln einer Häufigkeitsverteilung der Zeitdifferenz der Zeitstempel nacheinander an der Überwachungseinheit (16) eintreffender Datenpakete des isochronen Echtzeit-Datenstroms aus den Zeitstempeln der Datenpakete des isochronen Echtzeit-Datenstroms,
Überprüfen der Häufigkeitsverteilung der Zeitdifferenz der Zeitstempel nacheinander an der Überwachungseinheit (16) eintreffender Datenpakete des isochronen Echtzeit-Datenstroms auf Muster durch Vergleich mit einem Idealzustand des isochronen Echtzeit-Datenstroms, wobei die Muster eine Erkennung spezifischer Fehler in den Kommunikationsgeräten (10, 12) und dem die Kommunikationsgeräte verbindenden Datenübertragungsnetzwerk (14) ermöglichen, und
Ermitteln des Ortes oder der Ursache eines Fehlers bei der Übertragung des isochronen Echtzeit-Datenstroms in dem Datennetz basierend auf dem Ergebnis der Überprüfung der Häufigkeitsverteilung auf Muster.

2. Verfahren nach Anspruch 1, wobei der Idealzustand des isochronen Echtzeit-Datenstroms der Idealzustand der Zeitdifferenz zwischen zwei aufeinander folgenden Datenpaketen des isochronen Echtzeit-Datenstroms ist.

3. Verfahren nach Anspruch 1 oder 2, wobei die Datenpakete Realtime Transport Protocol-Datenpakete sind.

4. Verfahren nach einem der Ansprüche 1 bis 3, wobei der Echtzeit-Datenstrom Audiodaten, Voice-over-IP oder Comfort Noise enthält.

5. Verfahren nach einem der Ansprüche 1 bis 4, wobei als Ursache des Fehlers die Bandbreite oder ein Pufferspeicher aktiver Netzkomponenten des Datenübertragungsnetzwerks (14) ermittelbar sind.

6. Verfahren nach einem der Ansprüche 1 bis 5, wobei beim Auswerten der Häufigkeitsverteilung der Zeitdifferenz der Zeitstempel nacheinander an der Überwachungseinheit (16) eintreffender Datenpakete des isochronen Echtzeit-Datenstroms datentechnische Abbilder der Muster zur Unterscheidung eines beliebigen Normalzustands von einem Fehlerzustand herangezogen werden, und beim Vorhandensein von Fehlern diese dem sendenden Kommunikationsgerät (10, 12) oder dem Datenübertragungsnetzwerk (14) zuordenbar sind.

7. Verfahren nach einem der Ansprüche 1 bis 6, wobei bei einem Feststellen eines Fehlers in dem sendenden Kommunikationsgerät (10, 12) anhand des Musters der Häufigkeitsverteilung eine konkrete Ursache des Fehlers in dem sendenden Kommunikationsgerät ermittelbar ist.

8. Verfahren nach Anspruch 7 wobei als Ursache des Fehlers das Betriebssystem des Kommunikationsgeräts, die Konfiguration des Kommunikationsgeräts, sein Stack oder dessen Implementierung ermittelbar sind.

9. Verfahren nach einem der Ansprüche 1 bis 8, wobei zur Ermittlung der Fehlerursache berücksichtigt wird, ob die an der Datenübertragung des Echtzeit-Datenstroms beteiligten Komponenten fähig sind, ein Realtime Transport Protocol-Datenpaket zu verarbeiten oder nicht.

10. Verfahren nach einem der Ansprüche 1 bis 9, wobei zur Fehleranalyse des isochronen Echtzeit-Datenstroms der Echtzeit-Datenstrom zwischen den zwei Kommunikationsgeräten (10, 12) in einer oder beiden Richtungen an einer oder mehreren Stellen analysiert wird.

11. Ein Computer-lesbares Medium, das Softwarecodeabschnitte umfasst, die, wenn sie von einem Prozessor einer Überwachungseinheit (16) in einem Datennetz (100) ausgeführt werden, die Überwachungseinheit (16) veranlassen eine Fehleranalyse eines isochronen Echtzeit-Datenstroms in einem Datennetz (100) durchzuführen indem:
Datenpakete des isochronen Echtzeit-Datenstroms empfangen werden,
ein Zeitstempel für jedes zwischen den zwei Kommunikationsgeräten (10, 12) des Datennetzes (100) übertragene Datenpaket erzeugt wird, wobei die Zeitstempel den Zeitpunkt des Eintreffens eines jeweiligen Datenpaketes in der Überwachungseinheit (16) kennzeichnen,
eine Häufigkeitsverteilung der Zeitdifferenz der Zeitstempel nacheinander an der Überwachungseinheit (16) eintreffender Datenpakete des isochronen Echtzeit- Datenstroms aus den Zeitstempeln der Datenpakete des isochronen Echtzeit-Datenstroms ermittelt wird,
eine Überprüfung der Häufigkeitsverteilung der Zeitdifferenz der Zeitstempel nacheinander an der Überwachungseinheit (16) eintreffender Datenpakete des isochronen Echtzeit-Datenstroms in dem Überwachungseinheit (16) auf Muster vorgenommen wird, wobei Überprüfung auf Muster durch Vergleich der Häufigkeitsverteilung der Zeitdifferenz der Zeitstempel nacheinander an der Überwachungseinheit (16) eintreffender Datenpakete des isochronen Echtzeit-Datenstroms mit einem Idealzustand des isochronen Echtzeit-Datenstroms erfolgt und die Muster eine Erkennung spezifischer Fehler in den Kommunikationsgeräten (10, 12) und dem die Kommunikationsgeräte verbindenden Datenübertragungsnetzwerk (14) ermöglichen, und
der Ort oder die Ursache eines Fehlers bei der Übertragung des isochronen Echtzeit-Datenstroms in dem Datennetz basierend auf dem Ergebnis der Überprüfung der Häufigkeitsverteilung auf Muster ermittelt wird.

12. Computer-lesbares Medium nach Anspruch 11, das Softwarecodeabschnitte umfasst, die, wenn sie von dem Prozessor der Überwachungseinheit (16) ausgeführt werden, die Überwachungseinheit (16) veranlassen, das Verfahren nach einem der Ansprüche 2 bis 10 durchzuführen.

13. Überwachungseinheit zur Fehleranalyse eines isochronen Echtzeit-Datenstroms zwischen zwei Kommunikationsgeräten (10, 12) eines Datennetzes, die dazu ausgebildet ist:
Datenpakete des isochronen Echtzeit-Datenstroms zu empfangen,
einen Zeitstempel für jedes zwischen den zwei Kommunikationsgeräten (10, 12) des Datennetzes (100) übertragene Datenpaket zu erzeugen, wobei die Zeitstempel den Zeitpunkt des Eintreffens eines jeweiligen Datenpaketes an der Überwachungseinheit (16) kennzeichnen,
eine Häufigkeitsverteilung der Zeitdifferenz der Zeitstempel nacheinander an der Überwachungseinheit (16) eintreffender Datenpakete des isochronen Echtzeit-Datenstroms aus den Zeitstempeln der Datenpakete des isochronen Echtzeit-Datenstroms zu ermitteln,
eine Überprüfung durch Auswerten der Häufigkeitsverteilung der Zeitdifferenz der Zeitstempel nacheinander an der Überwachungseinheit (16) eintreffender Datenpakete des isochronen Echtzeit-Datenstroms in der Überwachungseinheit (16) auf Muster vorzunehmen, wobei Überprüfung auf Muster durch Vergleich der Häufigkeitsverteilung der Zeitdifferenz der Zeitstempel nacheinander an der Überwachungseinheit (16) eintreffender Datenpakete des isochronen Echtzeit-Datenstroms mit einem Idealzustand des Echtzeit-Datenstroms isochronen erfolgt und die Muster eine Erkennung spezifischer Fehler in den Kommunikationsgeräten (10, 12) und dem die Kommunikationsgeräte verbindenden Datenübertragungsnetzwerk (14) ermöglichen, und
den Ort oder die Ursache eines Fehlers bei der Übertragung des isochronen Echtzeit-Datenstroms in dem Datennetz basierend auf dem Ergebnis der Überprüfung der Häufigkeitsverteilung auf Muster zu ermitteln.

14. Kommunikationssystem mit einer Überwachungseinheit nach Anspruch 13.

15. Kommunikationssystem nach Anspruch 14, wobei die Überwachungseinheit (16) zum Ermitteln der Datenpakete an einer beliebigen Stelle zwischen den Kommunikationsgeräten (10, 12) angeordnet ist.

16. Kommunikationssystem nach Anspruch 14 oder 15, wobei dieses eine Vielzahl an Überwachungseinheiten nach Anspruch 13 aufweist.

## Claims

1. A method for error analysis of an isochronous real-time data stream in a data network (100) by a monitoring unit (16) in the data network (100), comprising the following steps, which are carried out by the monitoring unit (16):
receiving of data packets of the isochronous real-time data stream,
generation of a timestamp for each data packet being transmitted between two communication devices (10, 12) of the data network (100), the timestamps indicating the time of arrival of a respective data packet at the monitoring unit (16),
determining a frequency distribution of the time difference of the timestamps of data packets of the isochronous real-time data stream which arrive consecutively at the monitoring unit (16), from the timestamps of the data packets of the isochronous real-time data stream,
checking of the frequency distribution of the time difference of the timestamps of data packets of the isochronous real-time data stream which arrive consecutively at the monitoring unit (16) for patterns, by comparison with an ideal state of the isochronous real-time data stream, the patterns permitting recognition of specific errors in the communication devices (10, 12) and the data transmission network (14) connecting the communication devices, and
determining the location or the cause of an error in the transmission of the isochronous real-time data stream in the data network based on the result of the checking of the frequency distribution for patterns.

2. The method according to Claim 1, wherein the ideal state of the isochronous real-time data stream is the ideal state of the time difference between two consecutive data packets of the isochronous real-time data stream.

3. The method according to Claim 1 or 2, wherein the data packets are Realtime Transport Protocol data packets.

4. The method according to one of Claims 1 to 3, wherein the real-time data stream contains audio data, Voice-over-IP or Comfort Noise.

5. The method according to one of Claims 1 to 4, wherein the bandwidth or a buffer of active network components of the data transmission network (14) is determinable as the cause of the error.

6. The method according to one of Claims 1 to 5, wherein, in evaluating the frequency distribution of the time difference of the timestamps of data packets of the isochronous real-time data stream which arrive consecutively at the monitoring unit (16), digital representation of the patterns is used to differentiate a given normal state from an error state, and when errors are present these are attributable to the sending communication device (10, 12) or the data transmission network (14).

7. The method according to one of Claims 1 to 6, wherein, when an error is determined in the sending communication device (10, 12) based on the pattern of the frequency distribution, a specific cause of the error is determinable in the sending communication device.

8. The method according to Claim 7, wherein the operating system of the communication device, the configuration of the communication device, its stack or the implementation thereof can be determined as the cause of the error.

9. The method according to one of Claims 1 to 8, wherein, in order to determine the cause of the error, account is taken of whether or not the components involved in the data transmission of the real-time data stream are able to process a Realtime Transport Protocol data packet.

10. The method according to one of Claims 1 to 9, wherein, for error analysis of the isochronous real-time data stream, the real-time data stream between the two communication devices (10, 12) is analysed in one or both directions at one or more points.

11. Computer-readable medium which comprises software code excerpts which, when executed by a processor of a monitoring unit (16) in a data network (100), cause the monitoring unit (16) to perform an error analysis of an isochronous real-time data stream in a data network (100), by
receiving data packets of the isochronous real-time data stream,
generating a timestamp for each data packet being transmitted between the two communication devices (10, 12) of the data network (100), the timestamps indicating the time of arrival of a respective data packet at the monitoring unit (16),
determining a frequency distribution of the time difference of the timestamps of data packets of the isochronous real-time data stream which arrive consecutively at the monitoring unit (16) from the timestamps of the data packets of the isochronous real-time data stream,
checking the frequency distribution of the time difference of the timestamps of data packets of the isochronous real-time data stream which arrive consecutively at the monitoring unit (16) for patterns at the monitoring unit (16), with checking for patterns taking place by comparison of the frequency distribution of the time difference of the timestamps of data packets of the isochronous real-time data stream which arrive consecutively at the monitoring unit (16) with an ideal state of the isochronous real-time data stream, and the patterns permitting recognition of specific errors in the communication devices (10, 12) and the data transmission network (14) connecting the communication devices, and
determining the place or the cause of an error in the transmission of the isochronous real-time data stream in the data network based on the result of the checking of the frequency distribution for patterns.

12. The computer-readable medium according to Claim 11, which comprises software code excerpts which, when executed by the processor of the monitoring unit (16), cause the monitoring unit (16) to perform the method according to one of Claims 2 to 10.

13. A monitoring unit for the error analysis of an isochronous real-time data stream between two communication devices (10, 12) of a data network, which unit is configured to:
receive data packets of the isochronous real-time data stream,
generate a timestamp for each data packet being transmitted between the two communication devices (10, 12) of the data network (100), the timestamps indicating the time of arrival of a respective data packet at the monitoring unit (16),
determine a frequency distribution of the time difference of the timestamps of data packets of the isochronous real-time data stream which arrive consecutively at the monitoring unit (16), from the timestamps of the data packets of the isochronous real-time data stream,
check by evaluation of the frequency distribution of the time difference of the timestamps of data packets of the isochronous real-time data stream which arrive consecutively at the monitoring unit (16) for patterns at the monitoring unit (16), with checking for patterns taking place by comparison of the frequency distribution of the time difference of the timestamps of data packets of the isochronous real-time data stream which arrive consecutively at the monitoring unit (16) with an ideal state of the real-time data stream isochronous [sic], and the patterns permitting recognition of specific errors in the communication devices (10, 12) and the data transmission network (14) connecting the communication devices, and
determine the place or the cause of an error in the transmission of the isochronous real-time data stream in the data network based on the result of the checking of the frequency distribution for patterns.

14. A communication system with a monitoring unit according to Claim 13.

15. A communication system according to Claim 14, the monitoring unit (16) for ascertaining the data packets being arranged at any desired point between the communication devices (10, 12).

16. A communication system according to Claim 14 or 15, having a plurality of monitoring units according to Claim 13.

## Revendications

1. Procédé pour l'analyse d'erreur d'un flux de données en temps réel isochrone dans un réseau de données (100) grâce à une unité de surveillance (16) dans le réseau de données (100), comprenant les étapes suivantes, qui sont exécutées par l'unité de surveillance (16) :
réception de paquets de données du flux de données en temps réel isochrone,
production d'une estampille pour chaque paquet de données transmis entre deux appareils de communication (10, 12) du réseau de données (100), les estampilles identifiant le moment de l'arrivée d'un paquet de données au niveau de l'unité de surveillance (16),
recherche d'une distribution de fréquence de la différence des estampilles de paquets de données du flux de données en temps réel isochrone qui arrivent successivement au niveau de l'unité de surveillance (16), à partir des estampilles des paquets de données du flux de données en temps réel isochrone,
contrôle des formes de la distribution de fréquence de la différence des estampilles de paquets de données du flux de données en temps réel isochrone qui arrivent successivement au niveau de l'unité de surveillance (16), grâce à la comparaison avec un état idéal du flux de données en temps réel isochrone, les formes permettant une détection de défauts spécifiques dans les appareils de communication (10, 12) et dans le réseau de transmission de données (14) qui relie les appareils de communication, et
recherche de l'endroit ou de la cause d'un défaut lors de la transmission du flux de données en temps réel isochrone dans le réseau de données, sur la basse du résultat du contrôle des formes de la distribution de fréquence.

2. Procédé selon la revendication 1, selon lequel l'état idéal du flux de données en temps réel isochrone est l'état idéal de la différence de temps entre deux paquets de données successifs du flux de données en temps réel isochrone.

3. Procédé selon la revendication 1 ou 2, selon lequel les paquets de données sont des paquets de données de protocole de transfert en temps réel.

4. Procédé selon l'une des revendications 1 à 3, selon lequel le flux de données en temps réel contient des données audio, la voix sur IP ou un bruit d'agrément.

5. Procédé selon l'une des revendications 1 à 4, selon lequel on peut rechercher comme cause de l'erreur la largeur de bande ou une mémoire tampon de composants de réseau actifs du réseau de transmission de données (14).

6. Procédé selon l'une des revendications 1 à 5, selon lequel lors de l'évaluation de la distribution de fréquence de la différence des estampilles de paquets de données du flux de données en temps réel isochrone qui arrivent successivement au niveau de l'unité de surveillance (16), des représentations des formes en matière de technique de données sont utilisées pour distinguer un état normal quelconque d'un état d'erreur, et en présence d'erreurs celles-ci peuvent être attribuées à l'appareil de communication (10, 12) émetteur ou au réseau de transmission de données (14).

7. Procédé selon l'une des revendications 1 à 6, selon lequel en cas de constatation d'une erreur dans l'appareil de communication (10, 12) émetteur à l'aide de la forme de la distribution de fréquence, une cause concrète de l'erreur peut être recherchée dans l'appareil de communication émetteur.

8. Procédé selon la revendication 7, selon lequel on peut rechercher comme cause de l'erreur le système d'exploitation de l'appareil de communication, la configuration de l'appareil de communication, sa pile ou l'implémentation de celle-ci.

9. Procédé selon l'une des revendications 1 à 8, selon lequel pour rechercher la cause d'erreur, on tient compte du fait que les composants qui participent à la transmission de données du flux de données en temps réel sont aptes à traiter ou non un paquet de données de protocole de transfert en temps réel.

10. Procédé selon l'une des revendications 1 à 9, selon lequel pour l'analyse d'erreur du flux de données en temps réel isochrone, on analyse le flux de données en temps réel entre les deux appareils de communication (10, 12) dans un sens ou dans les deux sens, à un ou plusieurs endroits.

11. Support lisible par ordinateur qui comprend des segments de code logiciel qui, quand ils sont exécutés par un processeur d'une unité de surveillance (16) dans un réseau de données (100), amènent ladite unité de surveillance (16) à réaliser une analyse d'erreur d'un flux de données en temps réel isochrone dans un réseau de données (100), grâce au fait
que des paquets de données du flux de données en temps réel isochrone sont reçus,
qu'une estampille est produite pour chaque paquet de données transmis entre les deux appareils de communication (10, 12) du réseau de données (100), les estampilles identifiant le moment de l'arrivée d'un paquet de données dans l'unité de surveillance (16),
qu'une distribution de fréquence de la différence des estampilles de paquets de données du flux de données en temps réel isochrone qui arrivent successivement au niveau de l'unité de surveillance (16) est recherchée à partir des estampilles des paquets de données du flux de données en temps réel isochrone,
qu'un contrôle des formes de la distribution de fréquence de la différence des estampilles de paquets de données du flux de données en temps réel isochrone qui arrivent successivement au niveau de l'unité de surveillance (16) est réalisé dans l'unité de surveillance (16) , le contrôle des formes se faisant grâce à une comparaison de la distribution de fréquence de la différence des estampilles de paquets de données du flux de données en temps réel isochrone qui arrivent successivement au niveau de l'unité de surveillance (16), avec un état idéal du flux de données en temps réel isochrone, et les formes permettant une détection d'erreurs spécifiques dans les appareils de communication (10, 12) et dans le réseau de transmission de données (14) qui relie les appareils de communication, et
que l'endroit ou la cause d'une erreur lors de la transmission du flux de données en temps réel isochrone dans le réseau de données est recherché sur la base du résultat du contrôle des formes de la distribution de fréquence.

12. Support lisible par ordinateur selon la revendication 11, qui comprend des segments de code logiciel qui, quand ils sont exécutés par le processeur de l'unité de surveillance (16), amènent l'unité de surveillance (16) à appliquer le procédé selon l'une des revendications 2 à 10.

13. Unité de surveillance pour l'analyse d'erreur d'un flux de données en temps réel isochrone entre deux appareils de communication (10, 12) d'un réseau de données, qui est conçu pour :
recevoir des paquets de données du flux de données en temps réel isochrone,
produire une estampille pour chaque paquet de données transmis entre deux appareils de communication (10, 12) du réseau de données (100), les estampilles identifiant le moment de l'arrivée d'un paquet de données au niveau de l'unité de surveillance (16),
rechercher une distribution de fréquence de la différence des estampilles de paquets de données du flux de données en temps réel isochrone qui arrivent successivement au niveau de l'unité de surveillance (16), à partir des estampilles des paquets de données du flux de données en temps réel isochrone,
procéder dans l'unité de surveillance (16) à un contrôle, par évaluation, des formes de la distribution de fréquence de la différence des estampilles de paquets de données du flux de données en temps réel isochrone qui arrivent successivement au niveau de l'unité de surveillance (16), le contrôle des formes se faisant grâce à la comparaison de la distribution de fréquence de la différence des estampilles de paquets de données du flux de données en temps réel isochrone qui arrivent successivement au niveau de l'unité de surveillance (16), avec un état idéal du flux de données en temps réel isochrone, et les formes permettant une détection de défauts spécifiques dans les appareils de communication (10, 12) et dans le réseau de transmission de données (14) qui relie les appareils de communication, et
rechercher l'endroit ou la cause d'un défaut lors de la transmission du flux de données en temps réel isochrone dans le réseau de données, sur la base du résultat du contrôle des formes de la distribution de fréquence.

14. Système de communication avec une unité de surveillance selon la revendication 13.

15. Système de communication selon la revendication 14, dans lequel l'unité de surveillance (16) pour rechercher les paquets de données est disposé à n'importe quel endroit entre les appareils de communication (10, 12).

16. Système de communication selon la revendication 14 ou 15, ce système présentant un grand nombre d'unités de surveillance selon la revendication 13.
